# EUROPEAN PATENT APPLICATION

(11) **EP 1 030 322 A1**
(43) Date of publication of application: **23.08.2000**
(21) Application number: 98947807.8
(22) Date of filing: 09.10.1998
(51) Int. Cl.: H01G 4/04

(54) **CAPACITOR**

(30) Priority: 27.10.1997 JP 31119497
(71) Applicant: Sanyo Electric Co., Ltd., Moriguchi-shi, Osaka 570-8677 (JP)
(72) Inventor: FUJIMOTO, Masahisa, Moriguchi-shi Osaka 570-8677 (JP); NOHMA, Toshiyuki, Moriguchi-shi Osaka 570-8677 (JP); NISHIO, Koji, Moriguchi-shi Osaka 570-8677 (JP)
(74) Representative: VOSSIUS & PARTNER
(86) International application number: JP9804570
(87) International publication number: WO9922388

(57) **Abstract**

The capacitor of this invention includes a pair of electrodes opposing each other and made from a conductive material having a specific surface area of 960 m²/g or more; and a liquid dielectric filled between the pair of electrodes and having conductivity of 1 x 10⁻⁷ Scm⁻¹ or less. The capacitor of this invention has a high energy density.

## Description

### Technical Field

The present invention relates to a capacitor, and more particularly, it relates to improvement of a dielectric for the purpose of providing a capacitor with a high energy density.

### Background Art

A capacitor is a device comprising a pair of electrodes opposing each other and a dielectric disposed between the pair of electrodes, for storing a predetermined amount of charge by applying a voltage between the electrodes and discharging the stored charge by causing short-circuit between the electrodes.

The capacitance C (F: farad) of a capacitor is determined in accordance with the relative dielectric constant ε ₛ (dimensionless) of the used dielectric, the electrode area S (m²) and the distance d (m) between the electrodes as represented by the following Formula (1):${\text{C = ε}}_{\text{s}} {\text{· ε}}_{\text{o}} \text{· S/d}$ wherein ε ₒ indicates the dielectric constant of vacuum (≒ 8.854 x 10⁻¹² F/m).

Also, the amount Q (C: coulomb) of charge stored in the capacitor is given as a product of the capacitance C (F) and the applied voltage V (V) as represented by the following Formula (2):$\text{Q = CV}$

Accordingly, energy E (J: joule) stored in the capacitor is represented by the following Formula (3):${\text{E = 1/2 · C · V}}^{\text{2}}$

The capacitor stores energy without converting it differently from a chemical battery, and hence is suitable for rapid charge-discharge. Actually, a capacitor can be charged or discharged at a rate of several tens C (hourly rate). Furthermore, since the charge-discharge does not accompany a chemical reaction, a limitless number of charge-discharge cycles can be theoretically repeated. Actually, a capacitor with a charge-discharge cycle life of tens of thousands of cycles can be fabricated.

On the other hand, an imperfection of the capacitor is that merely small energy can be stored therein. For example, even in an electric double layer capacitor having the highest energy density (specific capacitance), the energy density is merely approximately 2 Wh/kg. Another imperfection of the capacitor is that the self-discharge is so large that the storage characteristic is poor. In particular, the sell-discharge of a capacitor with small capacitance of a µF class or pF class is so large that the storage characteristic is very poor. An electric double layer capacitor with comparatively large specific capacitance has, however, a self-discharge ratio of approximately 30%/month equivalent to that of a nickel-cadmium storage battery, and is not very poor in the storage characteristic differently from a capacitor with small capacitance of a µF class or pF class. Also, in the electric double layer capacitor, the capacitance is recovered by 100% through charge after storage.

In general, the capacitance of a capacitor means electrostatic capacity. Although they are similarly designated, the capacitance is a completely different concept from capacity of a battery. Specifically, the capacity of a battery is obtained by integrating a current by time and corresponds to the amount of charge stored in the battery in a predetermined period of time. In contrast, the gradient of a discharge curve (line) obtained in constant current discharge of a capacitor corresponds to a current value/capacitance. Accordingly, as the gradient is smaller, voltage decrease is smaller during discharge of stored charge and the capacitance is larger.

Energy stored in the capacitor is, as is obvious from the above-described Formula (3), in proportion to a product of the capacitance and the square of a voltage. Accordingly, in order to increase storable energy, it is necessary (i) to increase the voltage or (ii) to increase the capacitance.

However, with respect to (i), a high voltage exceeding a voltage against which a dielectric can resist (withstand voltage) cannot be applied to a capacitor because when the voltage applied to the capacitor exceeds a given voltage (breakdown voltage), the dielectric is broken down so as to allow a current to flow, and as a result, the charge stored in the electrodes is converted into heat energy and lost. The withstand voltage varies depending upon the kind and the thickness of the dielectric. The withstand voltage can be increased by increasing the thickness of the dielectric, but this increases the distance between the electrodes, and hence, the capacitance is decreased as is obvious from the above-described Formula (1). Accordingly, the energy stored in the capacitor cannot be always increased.

On the other hand, (ii) can be realized, as is obvious from the above-described Formula (1), by any of three methods, specifically, by decreasing the thickness of a dielectric, by increasing the electrode area, or by using a dielectric with a large relative dielectric constant.

When the thickness of the dielectric is decreased, however, although the capacitance can be increased, the withstand voltage is decreased at the same time. Therefore, the energy stored in the capacitor cannot be always increased.

As application of the method by increasing the electrode area, an electrolytic capacitor is well known. An electrolytic capacitor is obtained by roughening the surface of a metallic foil though electrolysis, oxidizing the surface though electrolytic oxidation and uniformly forming a metal oxide coat as a dielectric on the surface of the metallic foil. In general, an aluminum foil or a tantalum foil is used as the metallic foil because Al₂O₃ and Ta₂O₅ have comparatively high dielectric constants. The metallic foil is adhered onto one surface of the dielectric, and an electrolyte is adhered onto the other surface. In the electrolytic capacitor, the electrolyte works as an electrode (cathode). Since the electrolyte penetrates concaves on the roughened surface of the metallic foil to be adhered onto the metallic foil, the large electrode area attained through the roughening is effectively utilized. Also, when the dielectric is damaged for some reason, the electrolyte exhibits a recovering function to change the damaged metal surface into a metal oxide though electrolytic oxidation. Although the electrolytic capacitor uses the electrolyte, it can store charge without using an electrochemical reaction similarly to other capacitors because one of the electrodes is adhered onto the dielectric.

However, the carrier of charge is an ion included in the electrolyte and the mobility of the ion is low. Therefore, the electrolytic capacitor has a disadvantage that a response speed under application of an AC voltage is low, namely, the frequency characteristic is poor.

A device realized for overcoming the disadvantage of the electrolytic capacitor is a solid electrolytic capacitor. In the solid electrolytic capacitor, in order to use an electron with high mobility as the carrier of charge, manganese dioxide (MnO₂) having good adhesion onto a dielectric and a recovering function is used instead of the electrolyte. In a commercially available solid electrolytic capacitor, a conductive polymer or a TCNQ (tetracyanoquinodimethane) complex is used instead of manganese dioxide because manganese dioxide has low conductivity and large resistance.

The improvement from the electrolytic capacitor to the solid electrolytic capacitor, however, mainly aims at improvement of the frequency characteristic of the capacitor for use in a circuit, and hence, causes a disadvantage of small capacitance derived from solidification in using the capacitor for storing energy.

As a countermeasure, there appeared an electric double layer capacitor invented by H. I. Becker of General Electric, Co., U.S.A. in 1957 (U.S. Patent No. 2800616). An electric double layer means a phenomenon where cations or anions are selectively adsorbed onto a solid surface immersed in an electrolyte, so as to positively or negatively charge the solid surface, resulting in solvent molecules arranging on the interface between the solid surface and the electrolyte and counter ions (anions or cations) for compensating the charge of the solid surface arranging on the surfaces of the solvent molecules facing the solution. In the electric double layer capacitor, the solvent molecules correspond to the dielectric and the solid and the ions correspond to the electrodes. In the electric double layer capacitor, the thickness of the dielectric is very small in the order of a molecule, and the solvent molecules serving as the dielectric have a large dielectric constant and have high ability to dissolve the ions, and hence, it has large capacitance. The electric double layer capacitor can attain F class capacitance. In particular, when an activated carbon electrode with a large surface area is used as the solid electrode, very large capacitance can be achieved.

There is, however, a restriction in the electric double layer capacitor that merely a voltage smaller than a decomposition voltage (several V) of the electrolyte can be applied. Therefore, it has a disadvantage that merely small energy can be stored. Also, in regarding the electric double layer capacitor as a capacitor circuit, it has a structure in which two capacitors are serially connected to each other. Therefore, the capacitance of the electric double layer capacitor is disadvantageously as small as approximately 1/2 of the capacitance of each solid electrode.

The present invention was devised in consideration of the aforementioned existing circumstances, and an object is providing a capacitor with a high energy density.

### Disclosure of Invention

In order to achieve the aforementioned object, the capacitor of this invention comprises a pair of electrodes opposing each other and made from a conductive material having a specific surface area of 960 m²/g or more; and a liquid dielectric filled between the pair of electrodes and having conductivity of 1 x 10⁻⁷ Scm⁻¹ or less.

An example of the conductive material is activated carbon. The specific surface area of the conducive material is specified as 960 m²/g or more in order to increase the capacitance by increasing the electrode area.

Examples of the liquid dielectric are a silicone oil, a fluorine compound and a liquid crystal material. The conductivity of the liquid dielectric is specified as 1 x 10⁻⁷ Scm⁻¹ or less for the following reason: When the conductivity is as high as that of an electrolyte, the withstand voltage of the capacitor corresponds to the withstand voltage of a solvent of a Helmholtz layer with an uncontrollable thickness. As a result, the withstand voltage of the capacitor cannot be increased. In the capacitor of this invention in which the conductivity is 1 x 10⁻⁷ Scm⁻¹ or less, the withstand voltage of the liquid dielectric corresponds to the withstand voltage of the capacitor. Accordingly, the withstand voltage of the capacitor can be increased by increasing the thickness of the liquid dielectric.

Since the capacitor of this invention does not use an electrolyte, the withstand voltage of the capacitor can be higher than those of an electrolytic capacitor and an electric double layer capacitor, and hence, a higher voltage can be applied between the electrodes in charge. Furthermore, since the capacitor of this invention has a large electrode area, its capacitance is large. As a result, the capacitor of this invention attains a high energy density.

### Brief Description of Drawings

Figure 1 is a schematic sectional view of a capacitor A according to the invention.
Figure 2 is a graph for showing the charge-discharge curve of the capacitor A of the invention.
Figure 3 is a graph for showing the discharge load characteristic of the capacitor A of the invention.
Figure 4 is a graph for showing the charge load characteristic of the capacitor A of the invention.
Figure 5 is a graph for showing the charge-discharge cycle performance of the capacitor A of the invention.
Figure 6 is a graph for showing the relationship between the number of storage days and an open circuit voltage in the capacitor A of the invention.
Figure 7 is a graph for showing the storage characteristic of the capacitor A of the invention.
Figure 8 is a graph for showing the charge-discharge curve of a capacitor B of the invention.
Figure 9 is a graph for showing the discharge load characteristic of the capacitor B of the invention.
Figure 10 is a graph for showing the charge load characteristic of the capacitor B of the invention.
Figure 11 is a graph for showing the charge-discharge cycle performance of the capacitor B of the invention.
Figure 12 is a graph for showing the relationship between the number of storage days and an open circuit voltage in the capacitor B of the invention.
Figure 13 is a graph for showing the storage characteristic of the capacitor B of the invention.
Figure 14 is a graph for showing the charge-discharge curve of a capacitor C of the invention.
Figure 15 is a graph for showing the discharge load characteristic of the capacitor C of the invention.
Figure 16 is a graph for showing the charge load characteristic of the capacitor C of the invention.
Figure 17 is a graph for showing the charge-discharge cycle performance of the capacitor C of the invention.
Figure 18 is a graph for showing the relationship between the number of storage days and an open circuit voltage in the capacitor C of the invention.
Figure 19 is a graph for showing the storage characteristic of the capacitor C of the invention.
Figure 20 is a graph for showing the charge-discharge curve of a capacitor D of the invention.
Figure 21 is a graph for showing the discharge load characteristic of the capacitor D of the invention.
Figure 22 is a graph for showing the charge load characteristic of the capacitor D of the invention.
Figure 23 is a graph for showing the charge-discharge cycle performance of the capacitor D of the invention.
Figure 24 is a graph for showing the relationship between the number of storage days and an open circuit voltage in the capacitor D of the invention.
Figure 25 is a graph for showing the storage characteristic of the capacitor D of the invention.
Figure 26 is a graph for showing the charge-discharge curve of a capacitor E of the invention.
Figure 27 is a graph for showing the discharge load characteristic of the capacitor E of the invention.
Figure 28 is a graph for showing the charge load characteristic of the capacitor E of the invention.
Figure 29 is a graph for showing the charge-discharge cycle performance of the capacitor E of the invention.
Figure 30 is a graph for showing the relationship between the number of storage days and an open circuit voltage in the capacitor E of the invention.
Figure 31 is a graph for showing the storage characteristic of the capacitor E of the invention.
Figure 32 is a graph for showing the charge-discharge curve of a capacitor F of the invention.
Figure 33 is a graph for showing the discharge load characteristic of the capacitor F of the invention.
Figure 34 is a graph for showing the charge load characteristic of the capacitor F of the invention.
Figure 35 is a graph for showing the charge-discharge cycle performance of the capacitor F of the invention.
Figure 36 is a graph for showing the relationship between the number of storage days and an open circuit voltage in the capacitor F of the invention.
Figure 37 is a graph for showing the storage characteristic of the capacitor F of the invention.
Figure 38 is a graph for showing the charge-discharge curve of an electric double layer capacitor G serving as a comparative capacitor.

### Preferred Embodiments

The present invention will now be described in detail on the basis of preferred embodiments thereof, and it is noted that the invention is not limited to the following embodiments but can be practiced with appropriate modification without departing from the scope of the invention.

### Embodiment 1

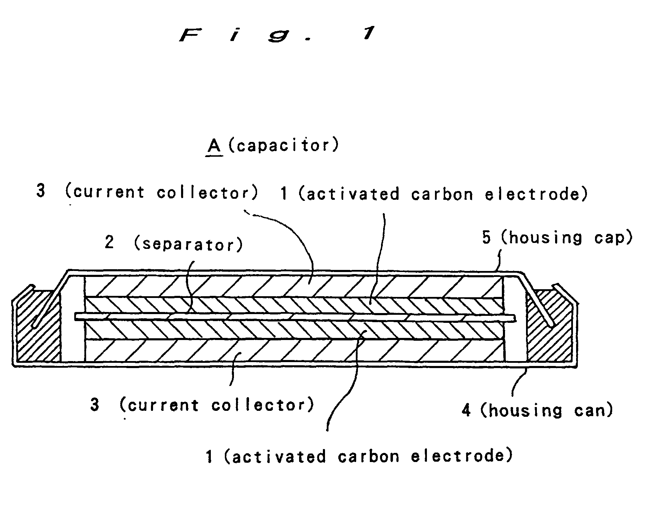

Activated carbon fabric (manufactured by Kuraray Co., Ltd.; Product Code: Kuractive 2500; with a specific surface area of 2500 m²/g and a thickness of 0.5 mm) was punched into a disk with a diameter of 20 mm, thereby preparing a pair of electrodes. Also, a polyethylene microporous film (manufactured by Asahi Chemical Industry Co., Ltd.; Product Code: HIPORE) with a thickness of 30 µm was punched into a disk with a diameter of 22 mm, thereby preparing a separator. An electrode group was fabricated by sandwiching the separator between the pair of electrodes, and 11 mg of a silicone oil (manufactured by Toshiba Corporation; Product Code: TSF451-50E; with a relative dielectric constant of 2.6, a withstand voltage of 80 kV/2.5 mm, conductivity (electric conductivity) of 1 x 10⁻¹⁵ Scm⁻¹ and specific gravity of 0.97), serving as a liquid dielectric, was poured upon the separator for impregnation. The resultant was housed in a housing can of stainless steel with a diameter of 24 mm and a height of 3 mm. Thus, a flat capacitor A (present capacitor) was fabricated. Figure 1 is a schematic sectional view of the thus fabricated capacitor A. The capacitor A of Figure 1 comprises a pair of activated carbon electrodes 1, 1, a separator 2 sandwiched therebetween, current collectors 3, a housing can 4, a housing cap 5 and the like.

### Energy Density

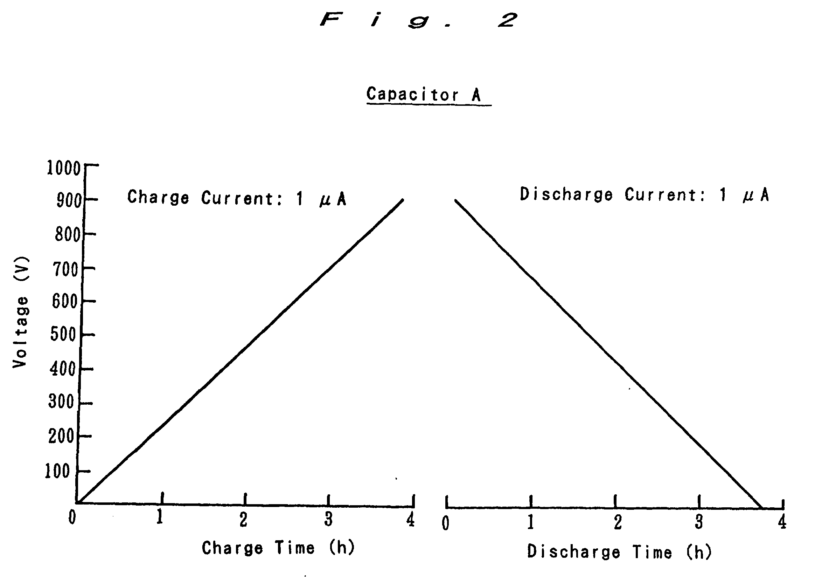

The capacitor A was charged with a constant current of 1 µA to 900 V and then discharged with a constant current of 1 µA to 0 V. The charge time and the discharge time were both 13545 seconds (3.762 hours). The charge-discharge curve obtained in this charge-discharge is shown in Figure 2. The capacitance and energy stored in charge of the capacitor A, obtained based on Figure 2, were 15.05 µF and 1.69 mWh, respectively. The capacitance was calculated by using the gradient of the voltage-time curve of discharge and the current value obtained in Figure 2, and the stored energy was calculated by using the area of the voltage-time curve of discharge and the current value obtained in Figure 2. The energy density of the capacitor A excluding the housing can was obtained by dividing the stored energy, 1.69 mWh, by the total weight of the used electrode group (including the pair of electrodes and the separator) and the poured silicone oil, 25.12 mg. As a result, the energy density was found to be 67.2 Wh/kg.

### Discharge Load Characteristic

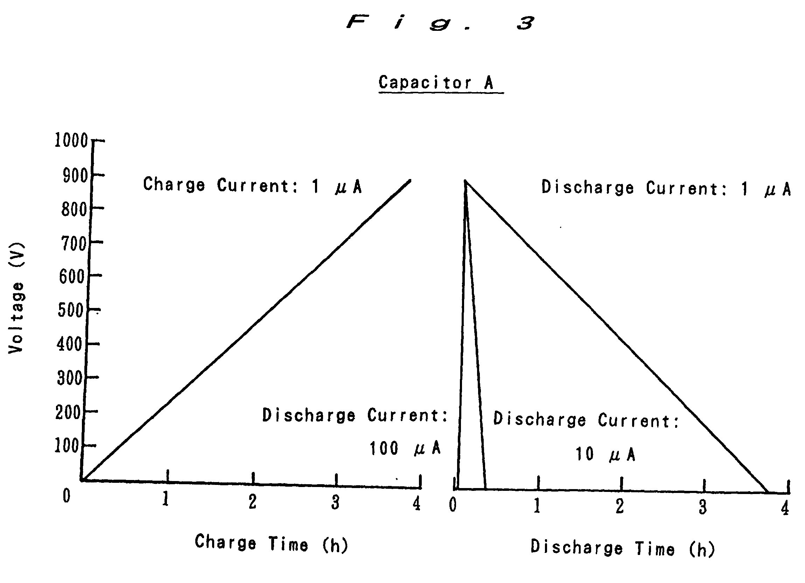

The capacitor A was charged with a constant current of 1 µA to 900 V and then discharged with a constant current of 1 µA, 10 µA or 100 µA to 0 V, thereby obtaining the discharge load characteristic. The charge time was 13545 seconds, and the discharge times were 13545 seconds, 1354.5 seconds and 135.45 seconds, respectively. The charge-discharge curve obtained in this charge-discharge is shown in Figure 3. It is understood from Figure 3 that the capacitor A has discharge energy of 1.69 mWh in highly loaded discharge with a current of 100 µA and can exhibit a good discharge load characteristic.

### Charge Load Characteristic

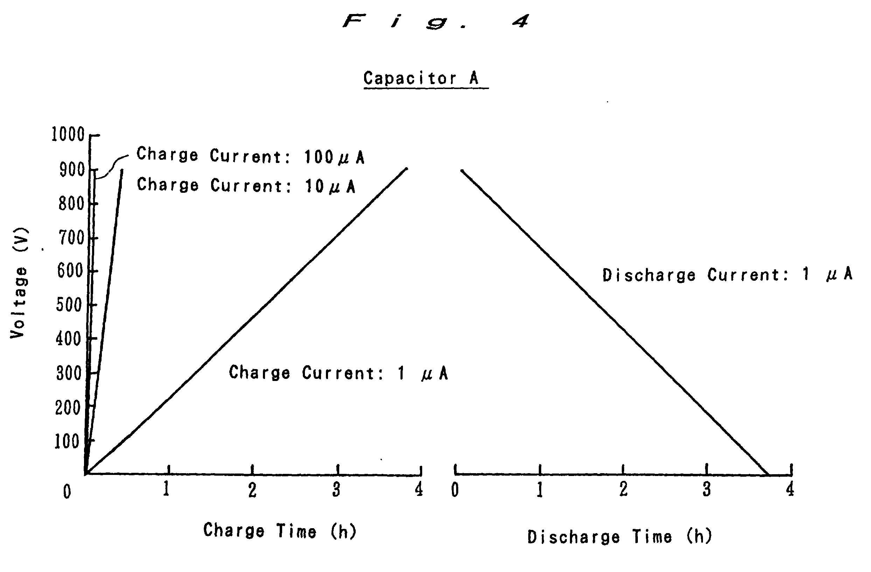

The capacitor A was charged with a constant current of 1 µA, 10 µA or 100 µA to 900 V and then discharged with a constant current of 1 µA to 0 V, thereby obtaining the charge load characteristic. The charge times were 13545 seconds, 1354.5 seconds and 135.45 seconds, respectively, and the discharge time was 13545 seconds. The charge-discharge curve obtained in this charge-discharge is shown in Figure 4. It is understood from Figure 4 that the capacitor A stores energy of 1.69 mWh in highly loaded charge with a current of 100 µA and can exhibit a good charge load characteristic.

### Charge-discharge Cycle Performance

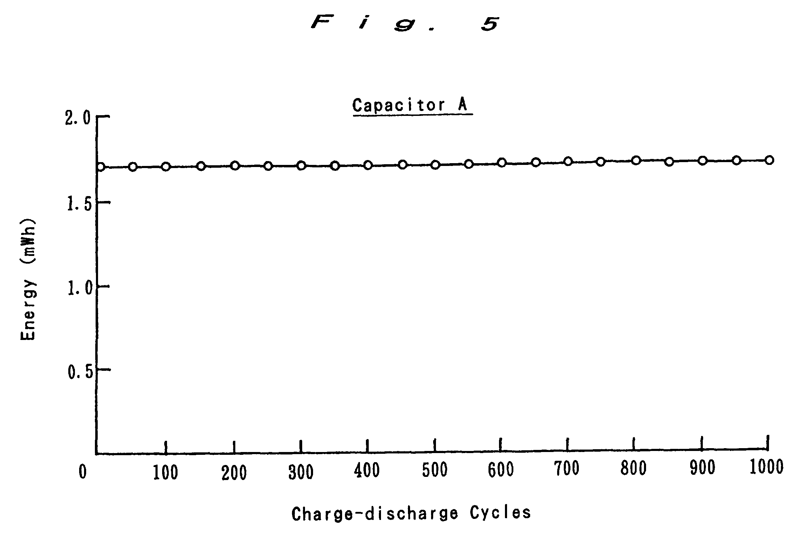

With respect to the capacitor A, 1000 charge-discharge cycles were run in each cycle of which it was charged with a constant current of 10 µA to 900 V and discharged with a constant current of 10 µA to 0 V, thereby obtaining the charge-discharge cycle performance. The result is shown in Figure 5. It is understood from Figure 5 that the energy stored in the capacitor A minimally decreased after the 1000 cycles were run and that the capacitor A can exhibit very good charge-discharge cycle performance.

### Storage Characteristic

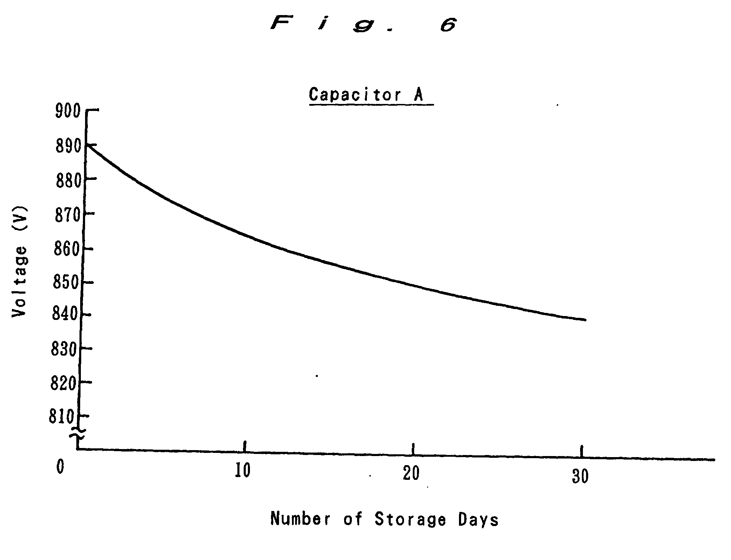

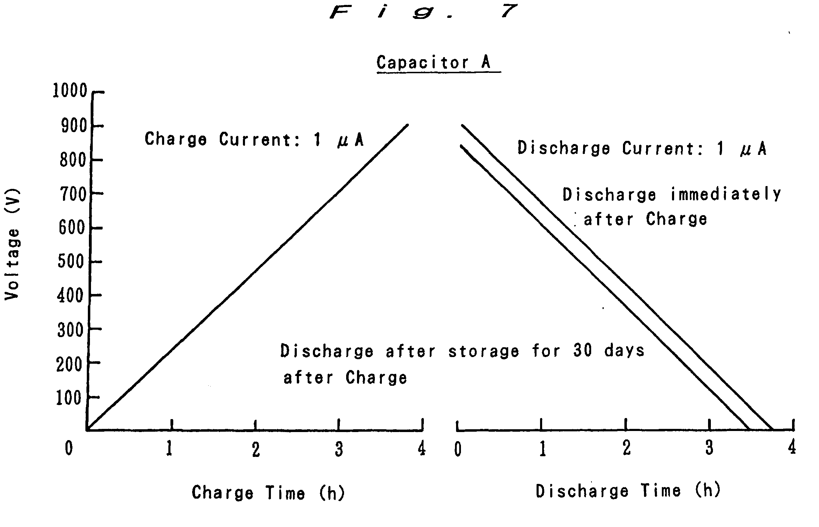

Next, the capacitor A was charged with a constant current of 1 µA to 900 V and stored at room temperature (25°C) for 30 days, thereby examining the relationship between the number of storage days and an open circuit voltage, and the residual energy ratio after the storage for 30 days. The relationship between the number of storage days and the open circuit voltage is shown in Figure 6, and the discharge characteristic obtained after the storage is shown in Figure 7. It is understood from Figure 7 that the residual energy ratio after the storage for 30 days is 87% and that the capacitor A can exhibit a good storage characteristic.

### Embodiment 2

A capacitor B (present capacitor) was fabricated in the same manner as in Embodiment 1 except that a glass separator (manufactured by Advantech; Product Code: GC-25A; with a thickness of 0.25 mm) was used as the separator instead of the polyethylene microporous film.

### Energy Density

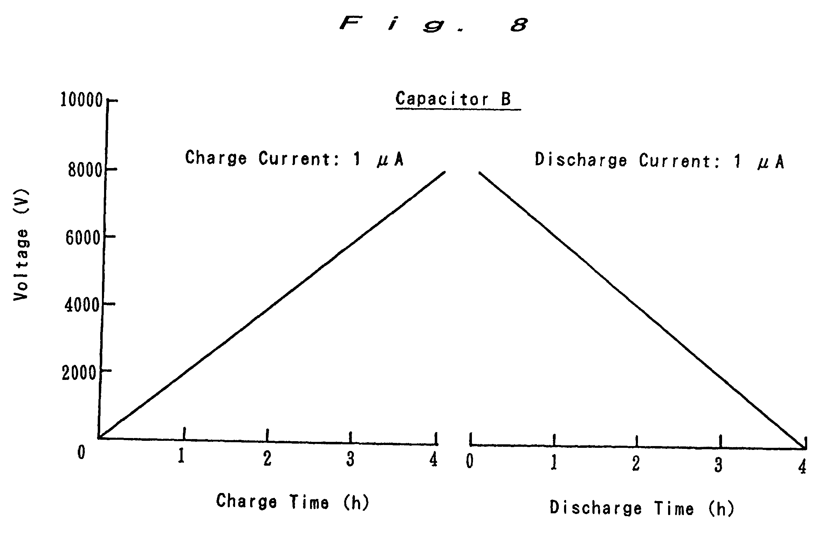

The capacitor B was charged with a constant current of 1 µA to 8000 V and then discharged with a constant current of 1 µA to 0 V. The charge time and the discharge time were both 14448 seconds (4 hours). The charge-discharge curve obtained in this charge-discharge is shown in Figure 8. The capacitance and energy stored in charge of the capacitor B, obtained based on Figure 8, were 1.806 µF and 16.05 mWh, respectively. The capacitance was calculated by using the gradient of the voltage-time curve of discharge and the current value obtained in Figure 8, and the stored energy was calculated by using the area of the voltage-time curve of discharge and the current value obtained in Figure 8. The energy density of the capacitor B excluding the housing can was obtained by dividing the stored energy; 16.05 mWh, by the total weight of the used electrode group (including the pair of electrodes and the separator) and the poured silicone oil, 106.9 mg. As a result, the energy density was found to be 150 Wh/kg.

### Discharge Load Characteristic

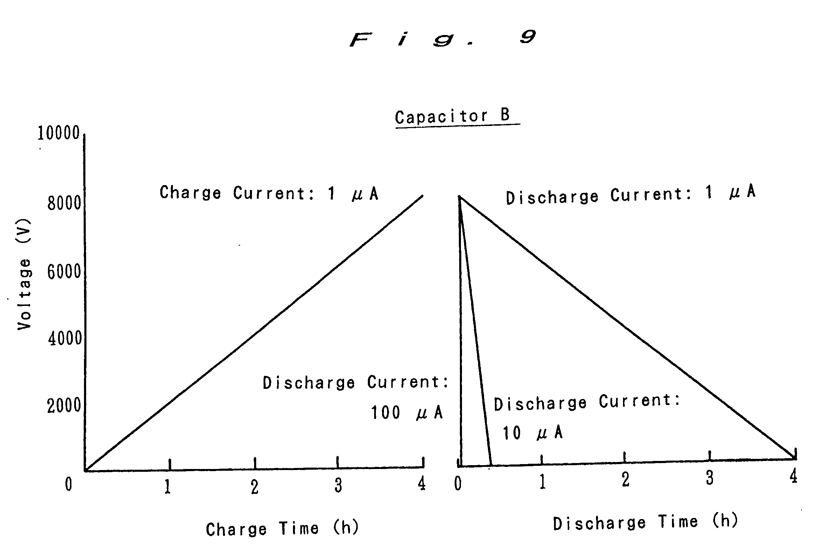

The capacitor B was charged with a constant current of 1 µA to 8000 V and then discharged with a constant current of 1 µA, 10 µA or 100 µA to 0 V, thereby obtaining the discharge load characteristic. The charge time was 14448 seconds, and the discharge times were 14448 seconds, 1444.8 seconds and 144.48 seconds, respectively. The charge-discharge curve obtained in this charge-discharge is shown in Figure 9. It is understood from Figure 9 that the capacitor B has discharge energy of 16.05 mWh in highly loaded discharge with a current of 100 µA and can exhibit a good discharge load characteristic.

### Charge Load Characteristic

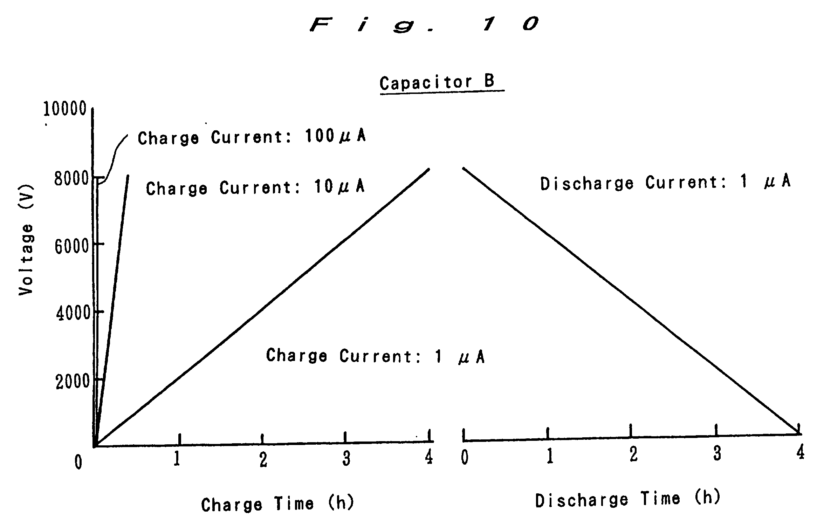

The capacitor B was charged with a constant current of 1 µA, 10 µA or 100 µA to 8000 V and then discharged with a constant current of 1 µA to 0 V, thereby obtaining the charge load characteristic. The charge times were 14448 seconds, 1444.8 seconds and 144.48 seconds, respectively, and the discharge time was 14448 seconds. The charge-discharge curve obtained in this charge-discharge is shown in Figure 10. It is understood from Figure 10 that the capacitor B stores energy of 16.05 mWh in highly loaded charge with a current of 100 µA and can exhibit a good charge load characteristic.

### Charge-discharge Cycle Performance

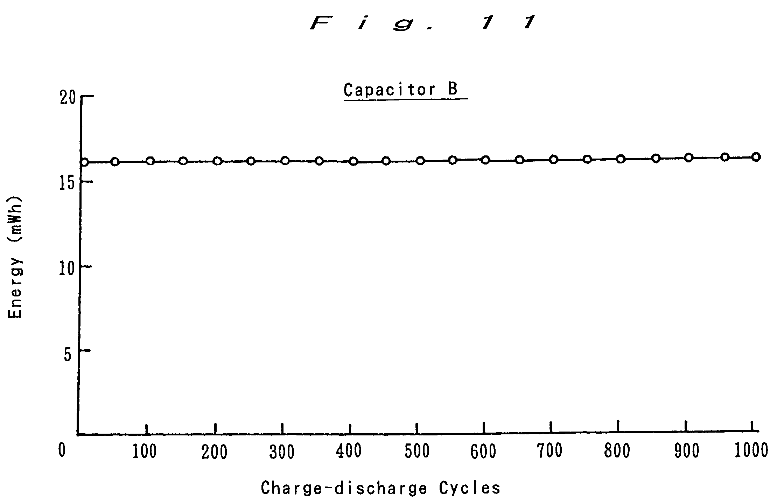

With respect to the capacitor B, 1000 charge-discharge cycles were run in each cycle of which it was charged with a constant current of 10 µA to 8000 V and discharged with a constant current of 10 µA to 0 V, thereby obtaining the charge-discharge cycle performance. The result is shown in Figure 11. It is understood from Figure 11 that the energy stored in the capacitor B minimally decreased after the 1000 cycles were run and that the capacitor B can exhibit very good charge-discharge cycle performance.

### Storage Characteristic

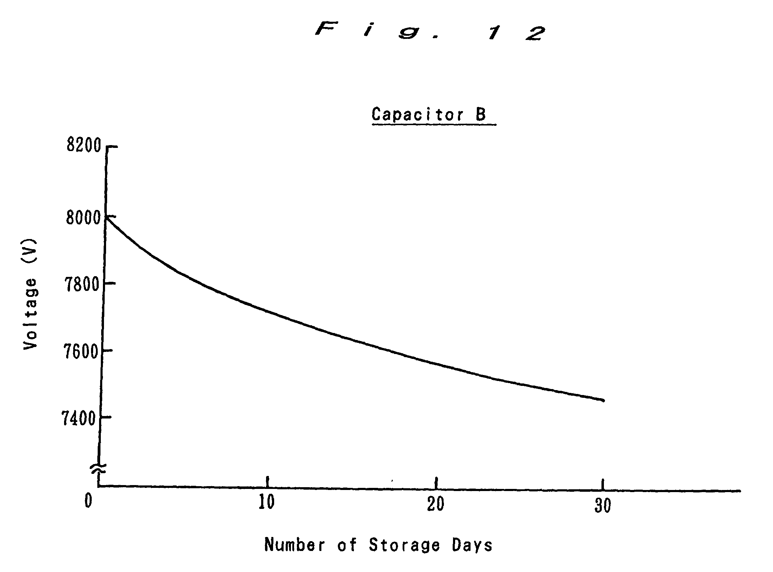

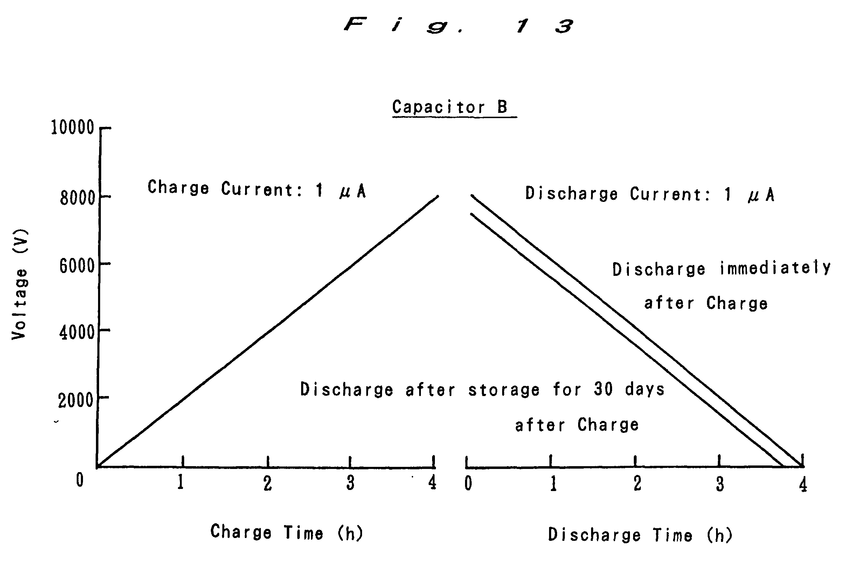

The capacitor B was charged with a constant current of 1 µA to 8000 V and stored at room temperature (25°C) for 30 days, thereby examining the relationship between the number of storage days and an open circuit voltage, and the residual energy ratio after the storage for 30 days. The relationship between the number of storage days and the open circuit voltage is shown in Figure 12, and the discharge characteristic obtained after the storage is shown in Figure 13. It is understood from Figure 13 that the residual energy ratio after the storage for 30 days is 87% and that the capacitor B can exhibit a good storage characteristic.

### Embodiment 3

A capacitor C (present capacitor) was fabricated in the same manner as in Embodiment 1 except that a liquid fluororesin (manufactured by Minnesota Mining and Manufacturing Co.; Product Code: Fluorinert FC5312; with a relative dielectric constant of 1.98, a withstand voltage of 40 kV/2.5 mm, conductivity of 4.3 x 10⁻¹⁶ Scm⁻¹ and specific gravity of 1.93) was used as the liquid dielectric instead of the silicone oil.

### Energy Density

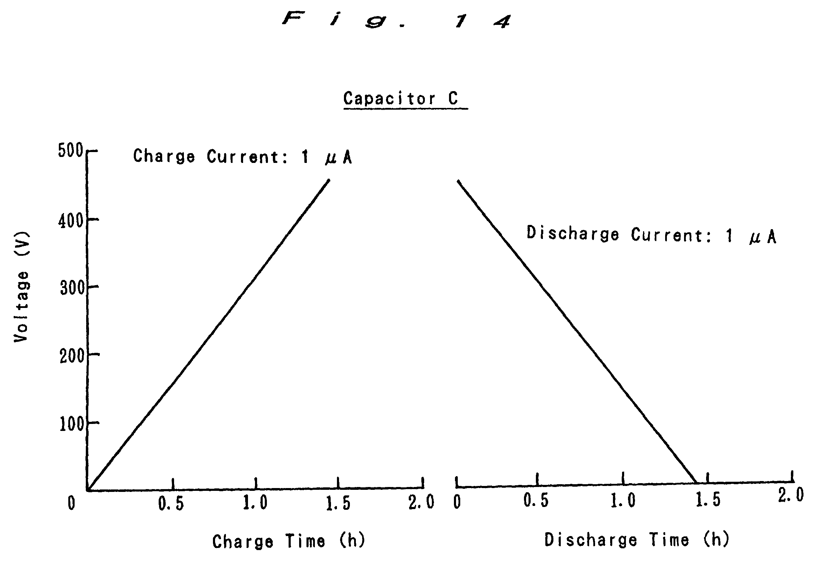

The capacitor C was charged with a constant current of 1 µA to 450 V and then discharged with a constant current of 1 µA to 0 V. The charge time and the discharge time were both 5130 seconds (1.43 hours). The charge-discharge curve obtained in this charge-discharge is shown in Figure 14. The capacitance and energy stored in charge of the capacitor C, obtained based on Figure 14, were 11.4 µF and 0.36 mWh, respectively. The capacitance was calculated by using the gradient of the voltage-time curve of discharge and the current value obtained in Figure 14, and the stored energy was calculated by using the area of the voltage-time curve of discharge and the current value obtained in Figure 14. The energy density of the capacitor C excluding the housing can was obtained by dividing the stored energy, 0.36 mWh, by the total weight of the used electrode group (including the pair of electrodes and the separator) and the poured fluororesin, 37.7 mg. As a result, the energy density was found to be 9.55 Wh/kg.

### Discharge Load Characteristic

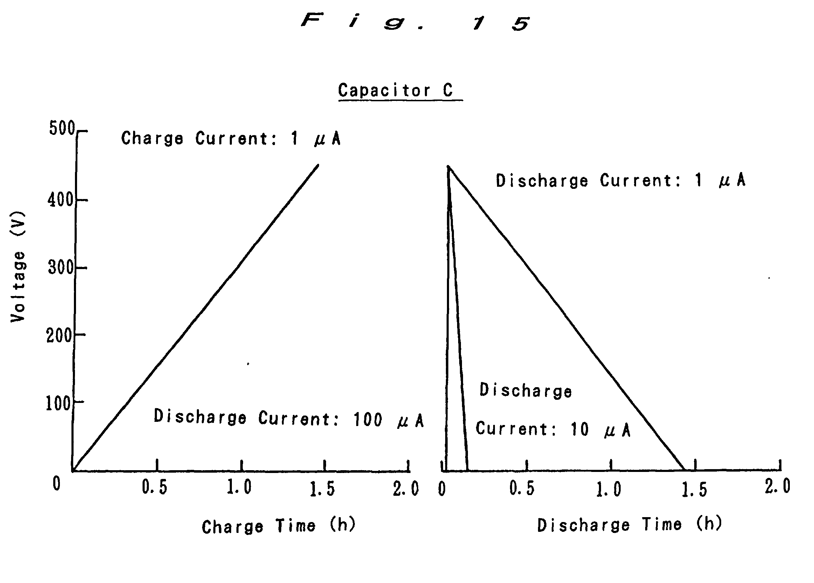

The capacitor C was charged with a constant current of 1 µA to 450 V and then discharged with a constant current of 1 µA, 10 µA or 100 µA to 0 V, thereby obtaining the discharge load characteristic. The charge time was 14448 seconds, and the discharge times were 5130 seconds, 513 seconds and 51.3 seconds, respectively. The charge-discharge curve obtained in this charge-discharge is shown in Figure 15. It is understood from Figure 15 that the capacitor C has discharge energy of 0.36 mWh in highly loaded discharge with a current of 100 µA and can exhibit a good discharge load characteristic.

### Charge Load Characteristic

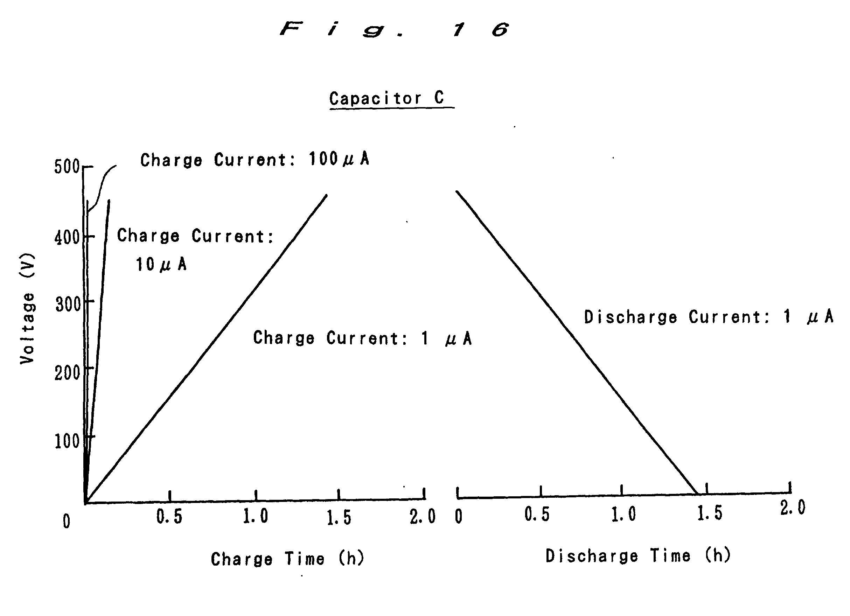

The capacitor C was charged with a constant current of 1 µA, 10 µA or 100 µA to 450 V and then discharged with a constant current of 1 µA to 0 V, thereby obtaining the charge load characteristic. The charge times were 5130 seconds, 513 seconds and 51.3 seconds, respectively, and the discharge time was 5130 seconds. The charge-discharge curve obtained in this charge-discharge is shown in Figure 16. It is understood from Figure 16 that the capacitor C stores energy of 0.36 mWh in highly loaded charge with a current of 100 µA and can exhibit a good charge load characteristic.

### Charge-discharge Cycle Performance

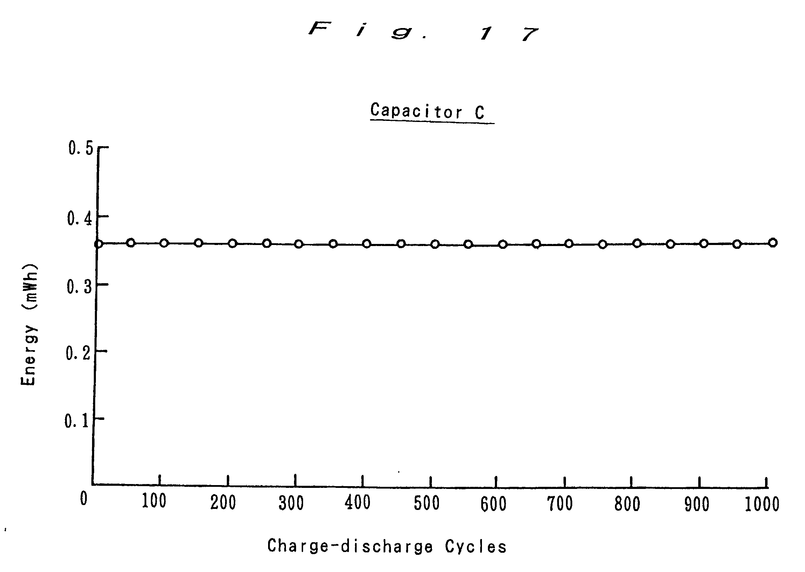

With respect to the capacitor C, 1000 charge-discharge cycles were run in each cycle of which it was charged with a constant current of 10 µA to 450 V and discharged with a constant current of 10 µA to 0 V, thereby obtaining the charge-discharge cycle performance. The result is shown in Figure 17. It is understood from Figure 17 that the energy stored in the capacitor C minimally decreased after the 1000 cycles were run and that the capacitor C can exhibit very good charge-discharge cycle performance.

### Storage Characteristic

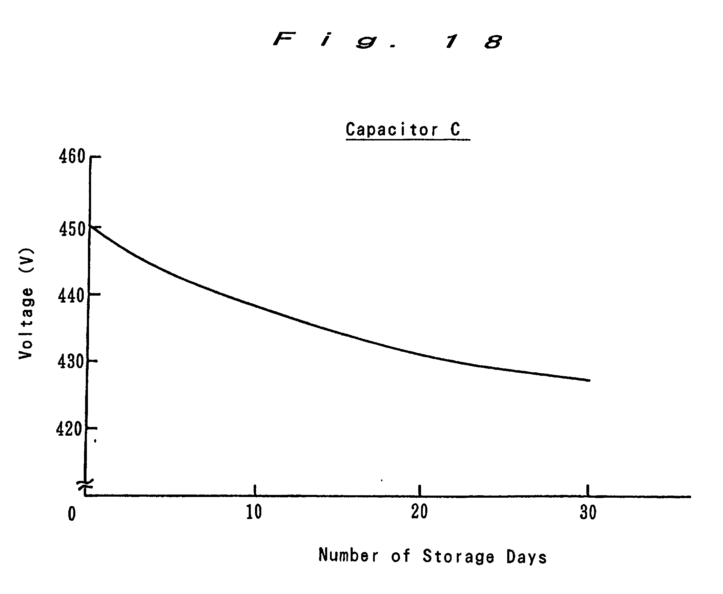

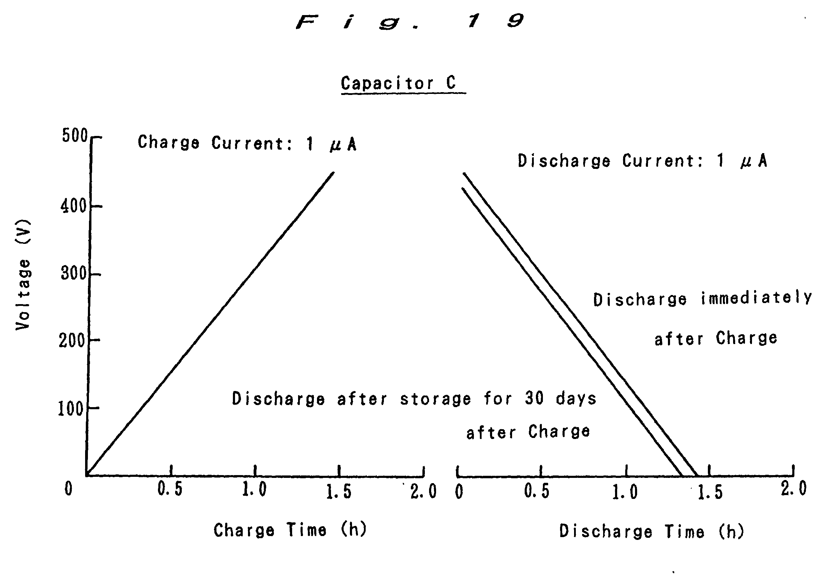

The capacitor C was charged with a constant current of 1 µA to 450 V and stored at room temperature (25°C) for 30 days, thereby examining the relationship between the number of storage days and an open circuit voltage, and the residual energy ratio after the storage for 30 days. The relationship between the number of storage days and the open circuit voltage is shown in Figure 18, and the discharge characteristic obtained after the storage is shown in Figure 19. It is understood from Figure 19 that the residual energy ratio after the storage for 30 days is 90% and that the capacitor C can exhibit a good storage characteristic.

### Embodiment 4

A capacitor D (present capacitor) was fabricated in the same manner as in Embodiment 1 except that 181 mg of a liquid fluororesin (manufactured by Minnesota Mining and Manufacture Co.; Product Code: Fluorinert FC5312; with a relative dielectric constant of 1.98, a withstand voltage of 40 kV/2.5 mm, conductivity of 4.3 x 10⁻¹⁶ Scm⁻¹) and specific gravity of 1.93) was used as the liquid dielectric instead of the silicone oil and that a glass separator (manufactured by Advantech; Product Code: GC-25A; with a thickness of 0.25 mm) was used as the separator instead of the polyethylene microporous film.

### Energy Density

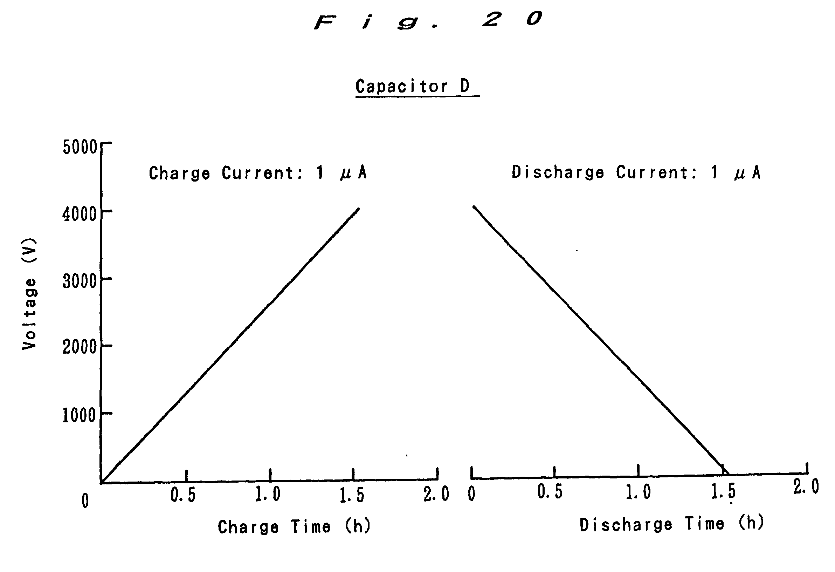

The capacitor D was charged with a constant current of 1 µA to 4000 V and then discharged with a constant current of 1 µA to 0 V. The charge time and the discharge time were both 5504 seconds (1.53 hours). The charge-discharge curve obtained in this charge-discharge is shown in Figure 20. The capacitance and energy stored in charge of the capacitor D, obtained based on Figure 20, were 1.376 µF and 3.06 mWh, respectively. The capacitance was calculated by using the gradient of the voltage-time curve of discharge and the current value obtained in Figure 20, and the stored energy was calculated by using the area of the voltage-time curve of discharge and the current value obtained in Figure 20. The energy density of the capacitor D excluding the housing can was obtained by dividing the stored energy 3.06 mWh, by the total weight of the used electrode group (including the pair of electrodes and the separator) and the poured liquid fluororesin, 199.8 mg. As a result, the energy density was found to be 15.3 Wh/kg.

### Discharge Load Characteristic

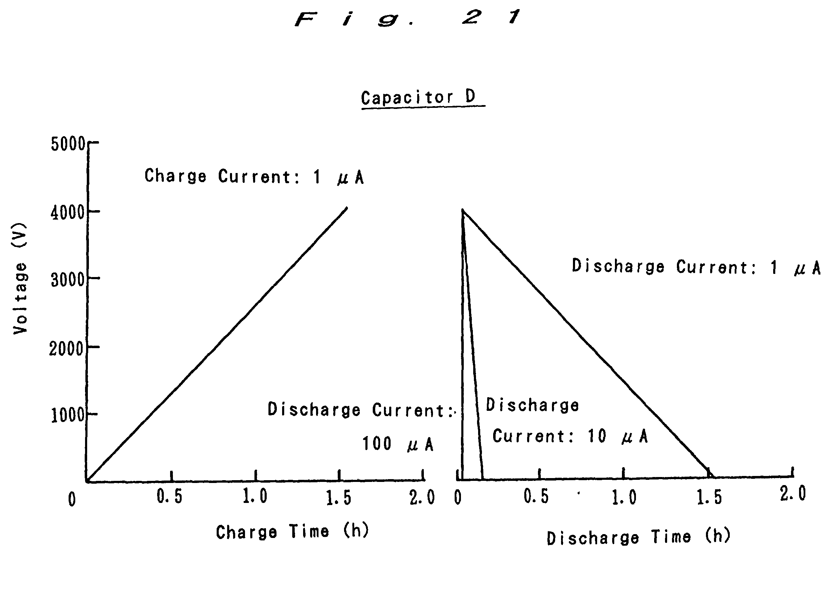

The capacitor D was charged with a constant current of 1 µA to 4000 V and then discharged with a constant current of 1 µA, 10 µA or 100 µA to 0 V, thereby obtaining the discharge load characteristic. The charge time was 5504 seconds, and the discharge times were 5504 seconds, 550.4 seconds and 55.04 seconds, respectively. The charge-discharge curve obtained in this charge-discharge is shown in Figure 21. It is understood from Figure 21 that the capacitor D has discharge energy of 3.06 mWh in highly loaded discharge with a current of 100 µA and can exhibit a good discharge load characteristic.

### Charge Load Characteristic

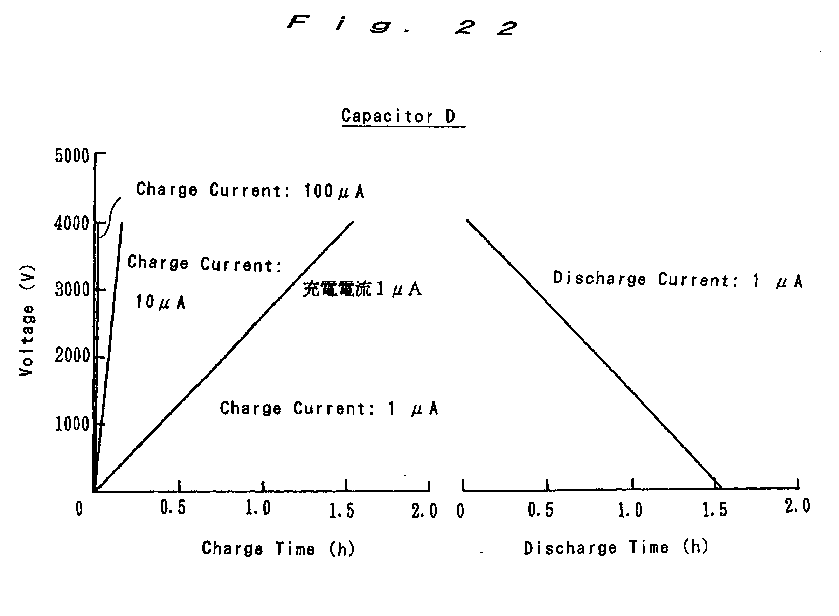

The capacitor D was charged with a constant current of 1 µA, 10 µA or 100 µA to 4000 V and then discharged with a constant current of 1 µA to 0 V, thereby obtaining the charge load characteristic. The charge times were 5504 seconds, 550.4 seconds and 55.04 seconds, respectively, and the discharge time was 5504 seconds. The charge-discharge curve obtained in this charge-discharge is shown in Figure 22. It is understood from Figure 22 that the capacitor D stores energy of 3.06 mWh in highly loaded charge with a current of 100 µA and can exhibit a good charge load characteristic.

### Charge-discharge Cycle Performance

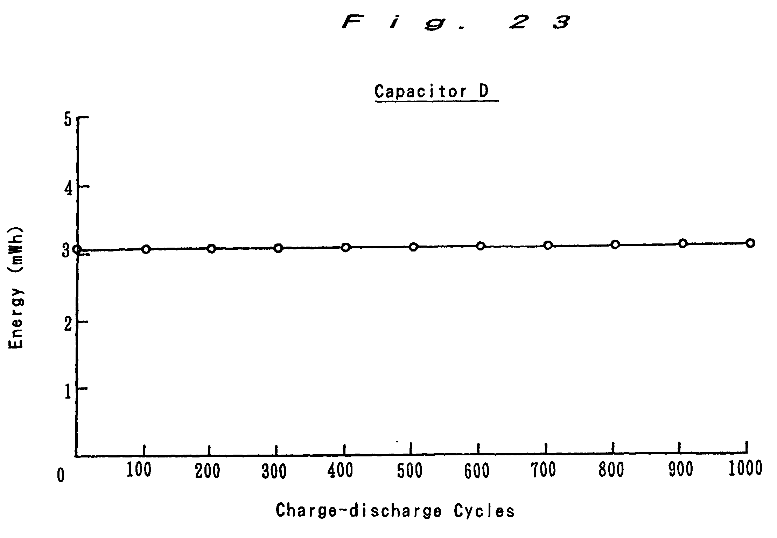

With respect to the capacitor D, 1000 charge-discharge cycles were run in each cycle of which it was charged with a constant current of 10 µA to 4000 V and discharged with a constant current of 10 µA to 0 V, thereby obtaining the charge-discharge cycle performance. The result is shown in Figure 23. It is understood from Figure 23 that the energy stored in the capacitor D minimally decreased after the 1000 cycles were run and that the capacitor D can exhibit very good charge-discharge cycle performance.

### Storage Characteristic

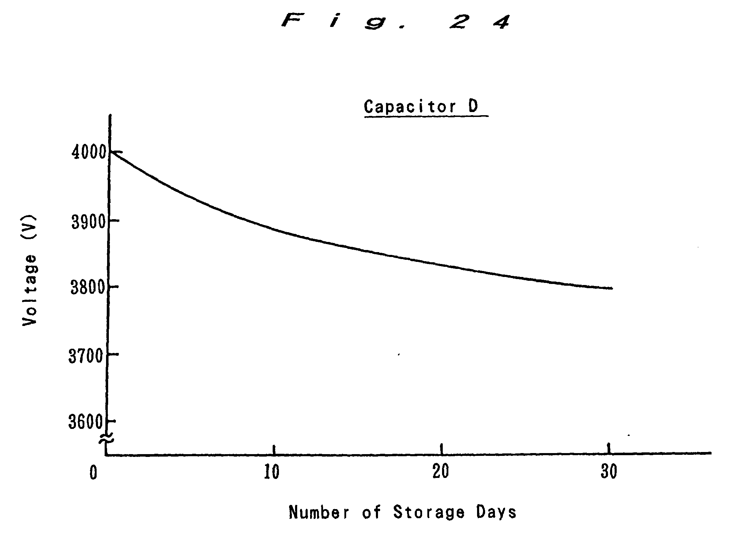

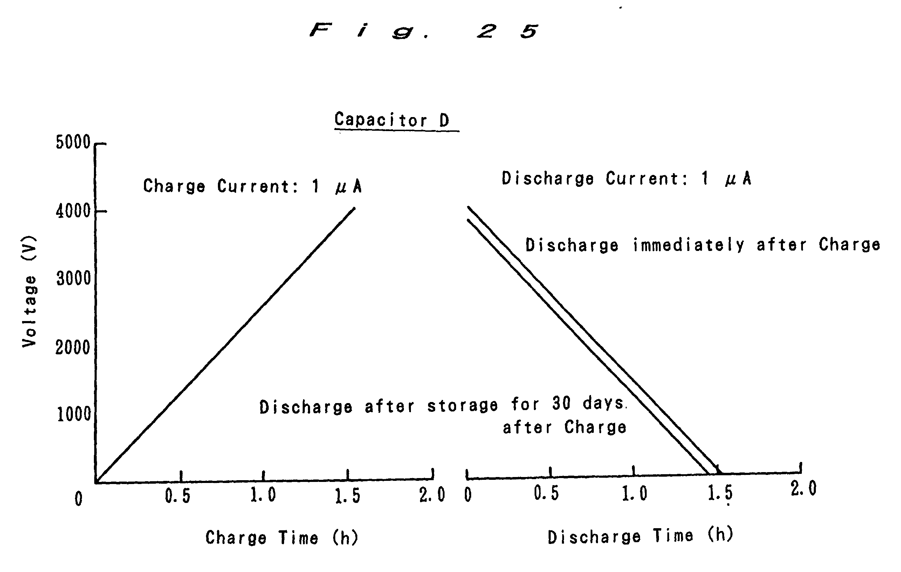

The capacitor D was charged with a constant current of 1 µA to 4000 V and stored at room temperature (25°C) for 30 days, thereby examining the relationship between the number of storage days and an open circuit voltage, and the residual energy ratio after the storage for 30 days. The relationship between the number of storage days and the open circuit voltage is shown in Figure 24, and the discharge characteristic obtained after the storage is shown in Figure 25. It is understood from Figure 24 that the residual energy ratio after the storage for 30 days is 90% and that the capacitor D can exhibit a good storage characteristic.

### Embodiment 5

A capacitor E (present capacitor) was fabricated in the same manner as in Embodiment 1 except that 115 mg of propylene carbonate (with a relative dielectric constant of 69, a withstand voltage of 20 kV/mm, conductivity of 2 x 10⁻⁸ Scm⁻¹ and specific gravity of 1.93) was used as the liquid dielectric instead of the silicone oil and that the separator was not used with the pair of electrodes fixed on the housing can for preventing short-circuit. A distance between the electrodes was 0.25 mm.

### Energy Density

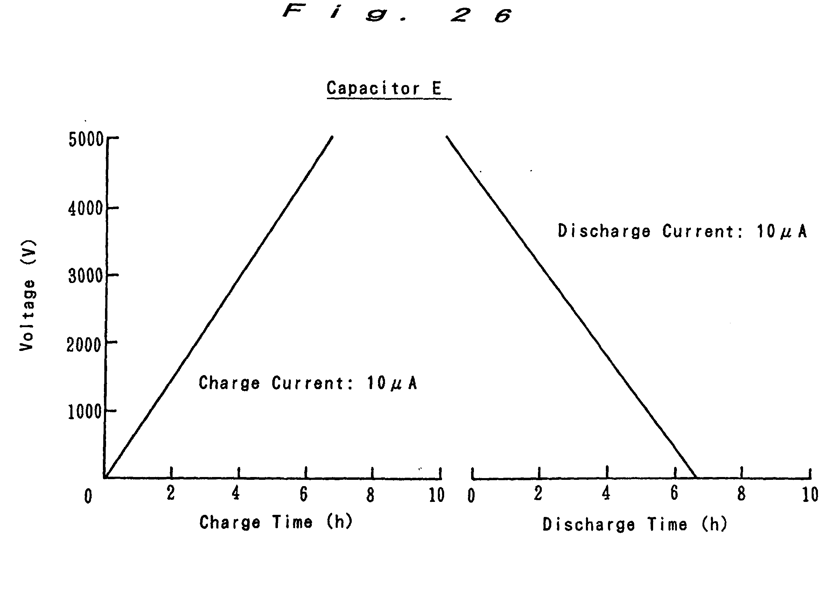

The capacitor E was charged with a constant current of 10 µA to 5000 V and then discharged with a constant current of 10 µA to 0 V. The charge time and the discharge time were both 23970 seconds (6.66 hours). The charge-discharge curve obtained in this charge-discharge is shown in Figure 26. The capacitance and energy stored in charge of the capacitor E, obtained based on Figure 26, were 47.94 µF and 166.5 mWh, respectively. The capacitance was calculated by using the gradient of the voltage-time curve of discharge and the current value obtained in Figure 26, and the stored energy was calculated by using the area of the voltage-time curve of discharge and the current value obtained in Figure 26. The energy density of the capacitor E excluding the housing can was obtained by dividing the stored energy; 166.5 mWh, by the total weight of the used electrode group (including the pair of electrodes and the separator) and the poured propylene carbonate, 130.4 mg. As a result, the energy density was found to be 1276 Wh/kg.

### Discharge Load Characteristic

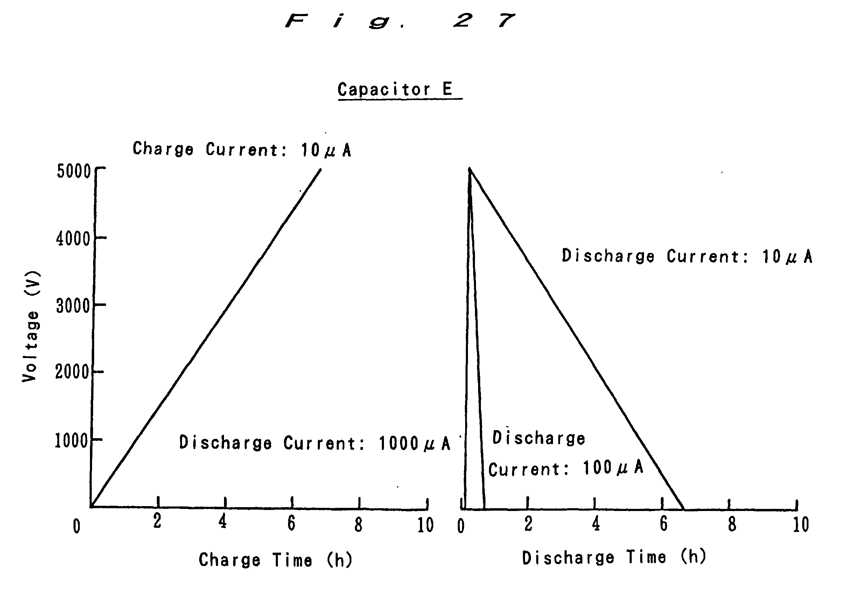

The capacitor E was charged with a constant current of 1 µA to 5000 V and then discharged with a constant current of 1 µA, 10 µA or 100 µA to 0 V, thereby obtaining the discharge load characteristic. The charge time was 23970 seconds, and the discharge times were 23970 seconds, 2397 seconds and 237.9 seconds, respectively. The charge-discharge curve obtained in this charge-discharge is shown in Figure 27. It is understood from Figure 27 that the capacitor E has discharge energy of 166.5 mWh in highly loaded discharge with a current of 100 µA and can exhibit a good discharge load characteristic.

### Charge Load Characteristic

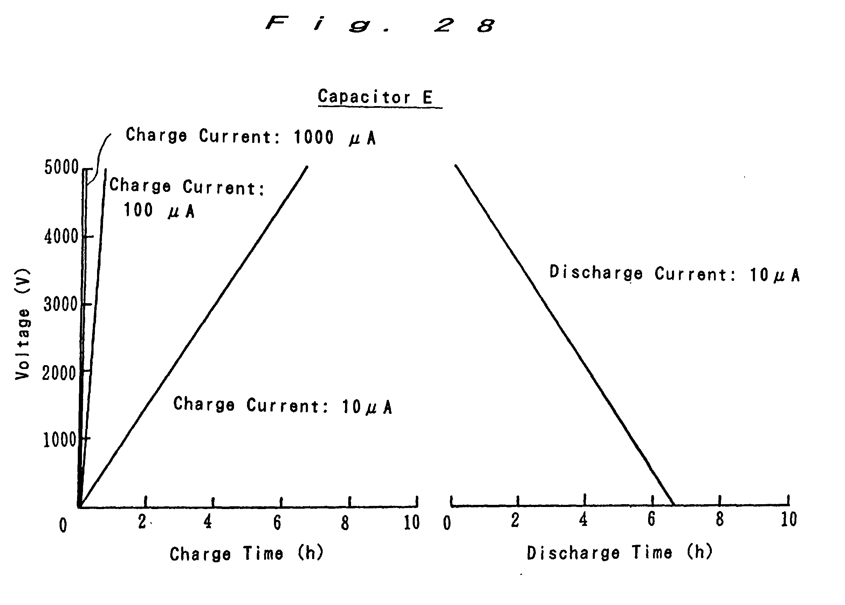

The capacitor E was charged with a constant current of 1 µA, 10 µA or 100 µA to 5000 V and then discharged with a constant current of 1 µA to 0 V, thereby obtaining the charge load characteristic. The charge times were 23970 seconds, 2397 seconds and 237.9 seconds, respectively, and the discharge time was 23970 seconds. The charge-discharge curve obtained in this charge-discharge is shown in Figure 28. It is understood from Figure 28 that the capacitor E stores energy of 166.5 mWh in highly loaded charge with a current of 100 µA and can exhibit a good charge load characteristic.

### Charge-discharge Cycle Performance

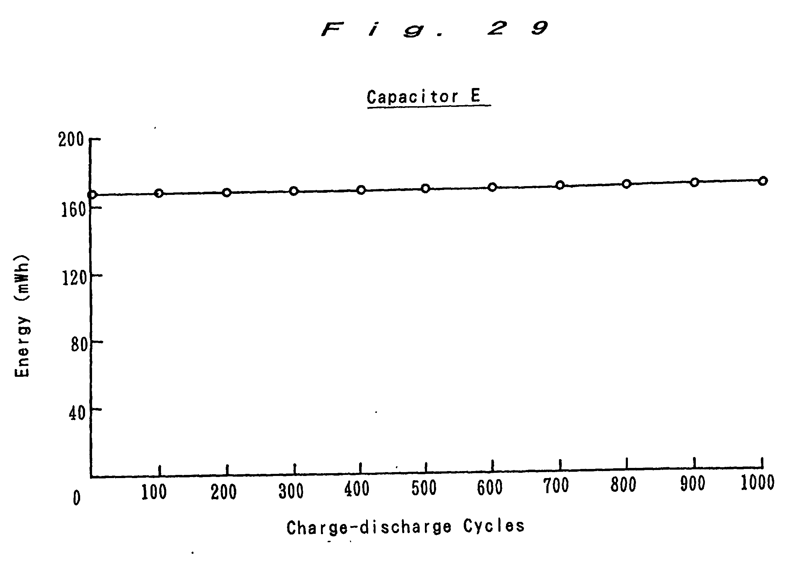

With respect to the capacitor E, 1000 charge-discharge cycles were run in each cycle of which it was charged with a constant current of 10 µA to 5000 V and discharged with a constant current of 10 µA to 0 V, thereby obtaining the charge-discharge cycle performance. The result is shown in Figure 29. It is understood from Figure 29 that the energy stored in the capacitor E minimally decreased after the 1000 cycles were run and that the capacitor E can exhibit very good charge-discharge cycle performance.

### Storage Characteristic

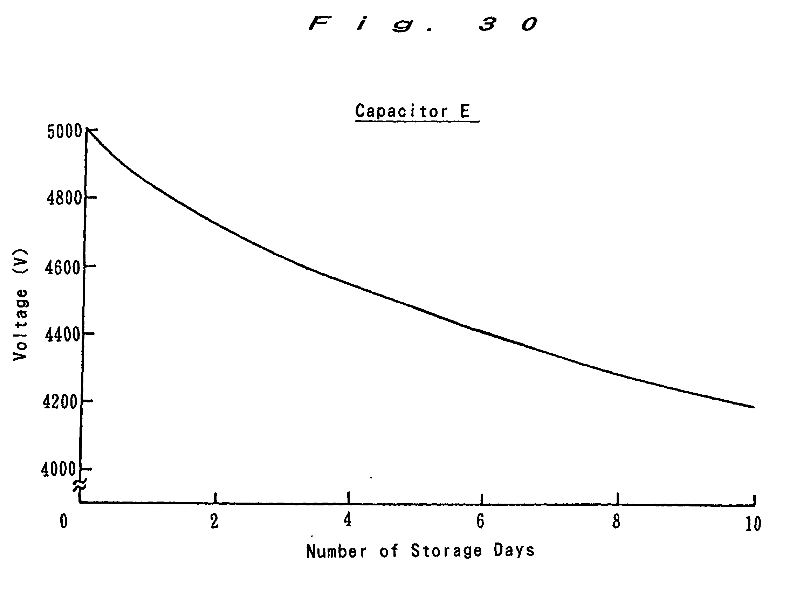

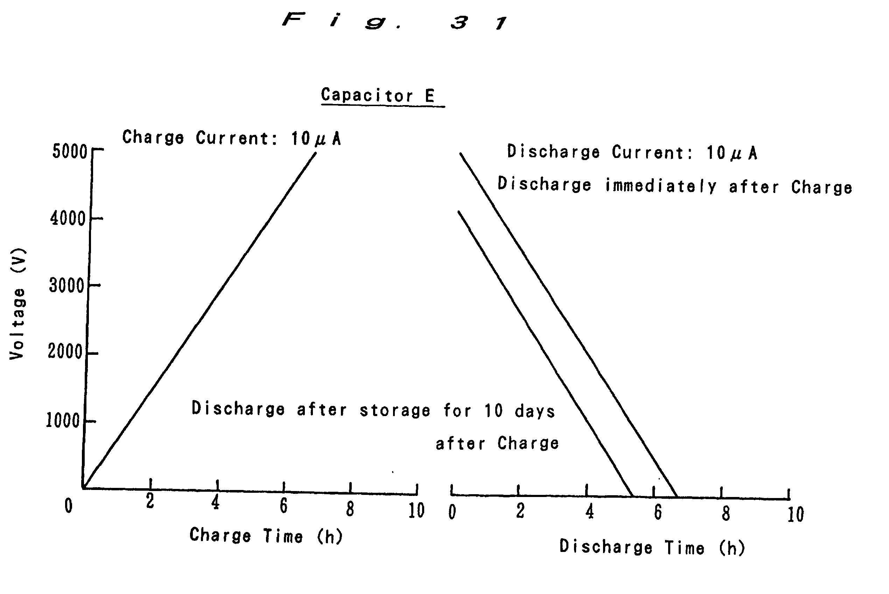

The capacitor E was charged with a constant current of 10 µA to 5000 V and stored at room temperature (25°C) for 10 days, thereby examining the relationship between the number of storage days and an open circuit voltage, and the residual energy ratio after the storage for 30 days. The relationship between the number of storage days and the open circuit voltage is shown in Figure 30, and the discharge characteristic obtained after the storage is shown in Figure 31. It is understood from Figure 31 that the residual energy ratio after the storage for 30 days is 70% and that the capacitor E can exhibit a good storage characteristic.

### Embodiment 6

A capacitor F (present capacitor) was fabricated in the same manner as in Embodiment 1 except that a liquid crystal material represented by the following formula (with a relative dielectric constant of 2500, a withstand voltage of at least 30 kV/2.5 mm and conductivity of 2.0 x 10⁻¹⁵ Scm⁻¹) was used as the liquid dielectric instead of the silicone oil and that the separator was not used with the pair of electrodes fixed on the housing can for preventing short-circuit. A distance between the electrodes was 0.25 mm.

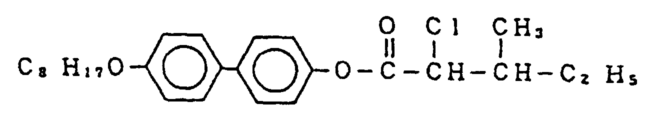

### Energy Density

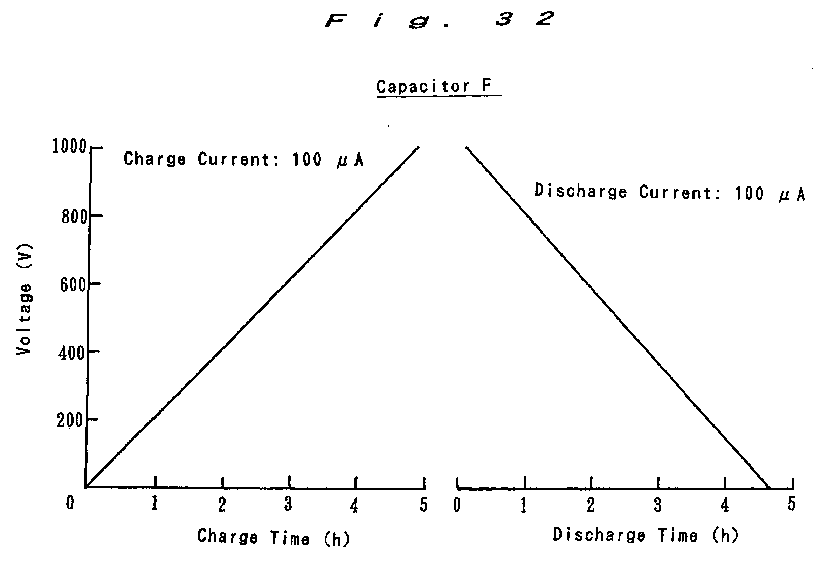

The capacitor F was charged with a constant current of 100 µA to 1000 V and then discharged with a constant current of 100 µA to 0 V. The charge time and the discharge time were both 17370 seconds (4.825 hours). The charge-discharge curve obtained in this charge-discharge is shown in Figure 32. The capacitance and energy stored in charge of the capacitor F, obtained based on Figure 32, were 1.737 mF and 241.25 mWh, respectively. The capacitance was calculated by using the gradient of the voltage-time curve of discharge and the current value obtained in Figure 32, and the stored energy was calculated by using the area of the voltage-time curve of discharge and the current value obtained in Figure 32. The energy density of the capacitor F excluding the housing can was obtained by dividing the stored energy, 241.25 mWh, by the total weight of the used electrode group (including the pair of electrodes and the separator) and the poured liquid crystal material, 110.7 mg. As a result, the energy density was found to be 2179 Wh/kg.

### Discharge Load Characteristic

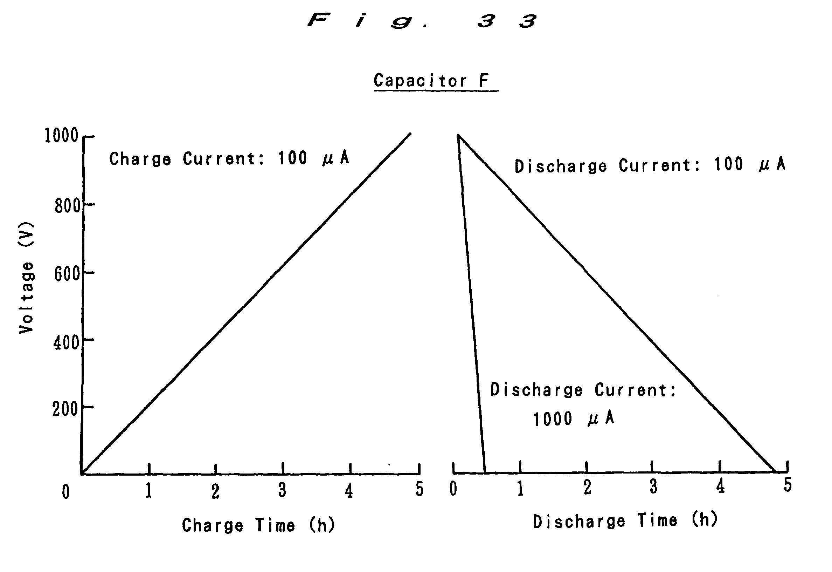

The capacitor F was charged with a constant current of 100 µA to 1000 V and then discharged with a constant current of 1 µA, 100 µA or 1000 µA to 0 V, thereby obtaining the discharge load characteristic. The charge time was 17370 seconds, and the discharge times were 17370 seconds and 1737 seconds, respectively. The charge-discharge curve obtained in this charge-discharge is shown in Figure 33. It is understood from Figure 33 that the capacitor F has discharge energy of 241.25 mWh in highly loaded discharge with a current of 1000 µA and can exhibit a good discharge load characteristic.

### Charge Load Characteristic

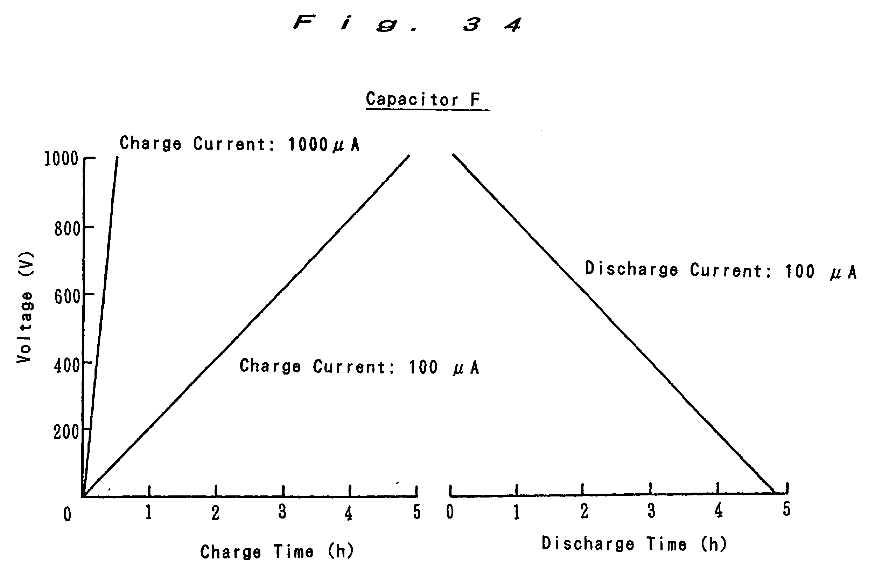

The capacitor F was charged with a constant current of 100 µA or 1000 µA to 1000 V and then discharged with a constant current of 100 µA to 0 V, thereby obtaining the charge load characteristic. The charge times were 17370 seconds and 1737 seconds, respectively, and the discharge time was 17370 seconds. The charge-discharge curve obtained in this charge-discharge is shown in Figure 34. It is understood from Figure 34 that the capacitor F stores energy of 241.25 mWh in highly loaded charge with a current of 1000 µA and can exhibit a good charge load characteristic.

### Charge-discharge Cycle Performance

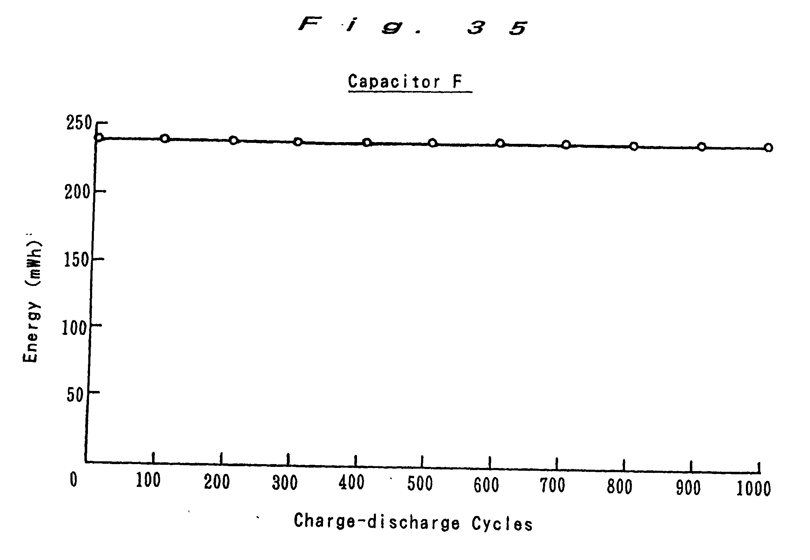

With respect to the capacitor F, 1000 charge-discharge cycles were run in each cycle of which it was charged with a constant current of 100 µA to 1000 V and discharged with a constant current of 100 µA to 0 V, thereby obtaining the charge-discharge cycle performance. The result is shown in Figure 35. It is understood from Figure 35 that the energy stored in the capacitor F minimally decreased after the 1000 cycles were run and that the capacitor F can exhibit very good charge-discharge cycle performance.

### Storage Characteristic

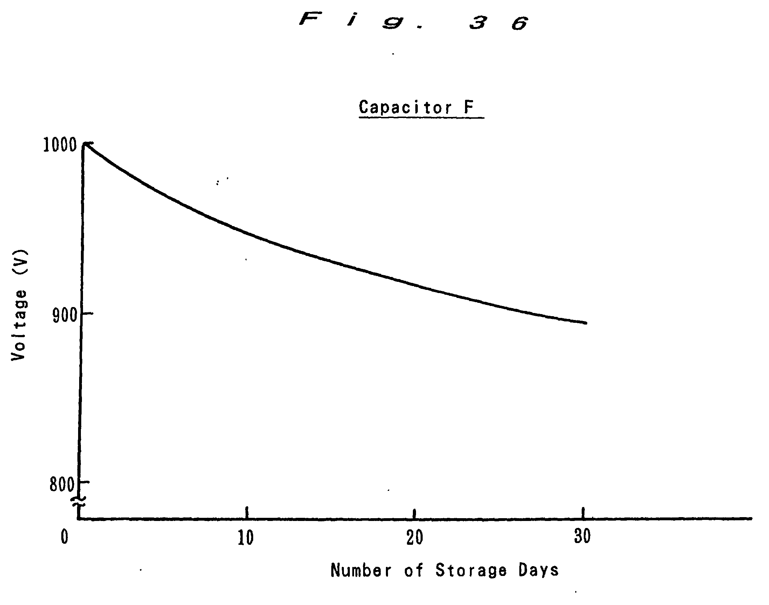

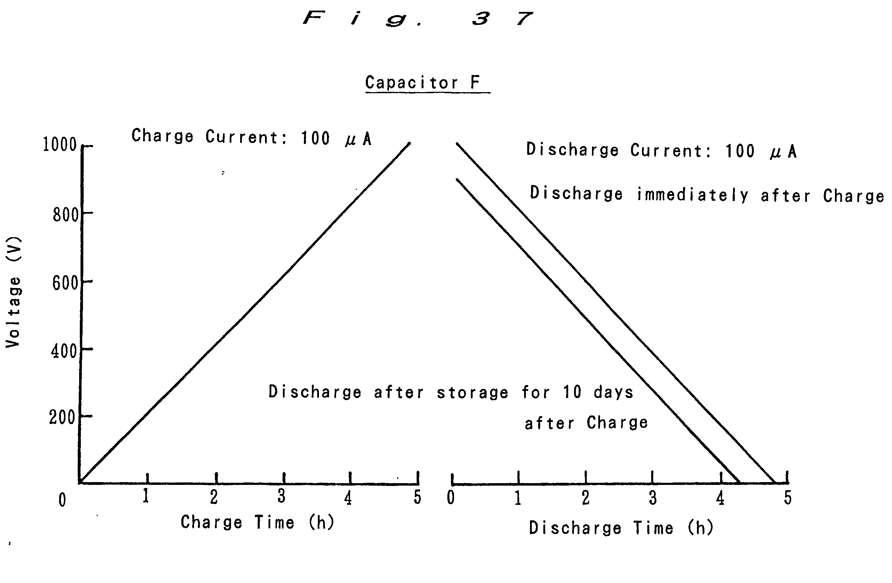

The capacitor F was charged with a constant current of 100 µA to 1000 V and stored at room temperature (25°C) for 10 days, thereby examining the relationship between the number of storage days and an open circuit voltage, and the residual energy ratio after the storage for 30 days. The relationship between the number of storage days and the open circuit voltage is shown in Figure 36, and the discharge characteristic obtained after the storage is shown in Figure 37. It is understood from Figure 37 that the residual energy ratio after the storage for 30 days is 80% and that the capacitor F can exhibit a good storage characteristic.

### Embodiment 7

An activated carbon powder made from wood was dispersed in an NMP solution including 5 wt% of poly(vinylidene fluoride), thereby preparing slurry. The slurry was applied on an aluminum foil with a thickness of 20 µm and the resultant was dried and formed into a sheet with a specific surface area of 1000 m²/g and a thickness of 0.5 mm. The sheet was punched into a disk with a diameter of 20 mm. Thus, a pair of electrodes were prepared. A capacitor G was fabricated in the same manner as in Embodiment 1 except that the pair of electrodes thus prepared were used.

### Energy Density

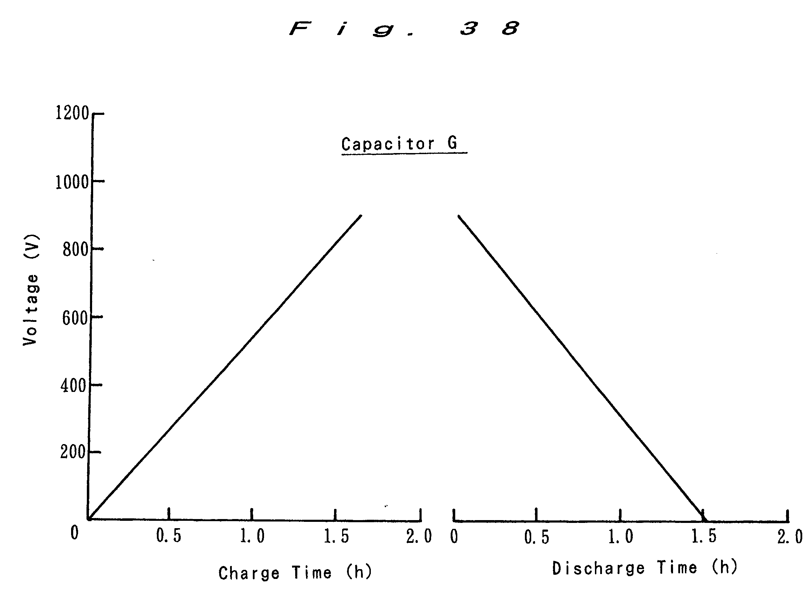

The capacitor G was charged with a constant current of 1 µA to 900 V and then discharged with a constant current of 1 A to 0 V. The charge time and the discharge time were both 5418 seconds. The charge-discharge curve obtained in this charge-discharge is shown in Figure 38. The capacitance and energy stored in charge of the capacitor G, obtained based on Figure 38, were 6.02 µF and 0.677 mWh, respectively. The capacitance was calculated by using the gradient of the voltage-time curve of discharge and the current value obtained in Figure 38, and the stored energy was calculated by using the area of the voltage-time curve of discharge and the current value obtained in Figure 38. The energy density of the capacitor G excluding the housing can was obtained by dividing the stored energy, 0.677 mWh, by the total weight of the used electrode group (including the pair of electrodes and the separator) and the poured silicone oil, 25.12 mg. As a result, the energy density was found to be 26.95 Wh/kg.

### Embodiment 8

A mixture of 100 parts by weight of coconut husk activated carbon and 5 parts by weight of polytetrafluoroethylene was formed into a sheet with a specific surface area of 960 m²/g and a thickness of 0.5 mm, and the sheet was punched into a disk with a diameter of 20 mm, thereby preparing a pair of electrodes. A capacitor H was fabricated in the same manner as in Embodiment 1 except that the pair of electrodes thus prepared were used.

### Energy Density

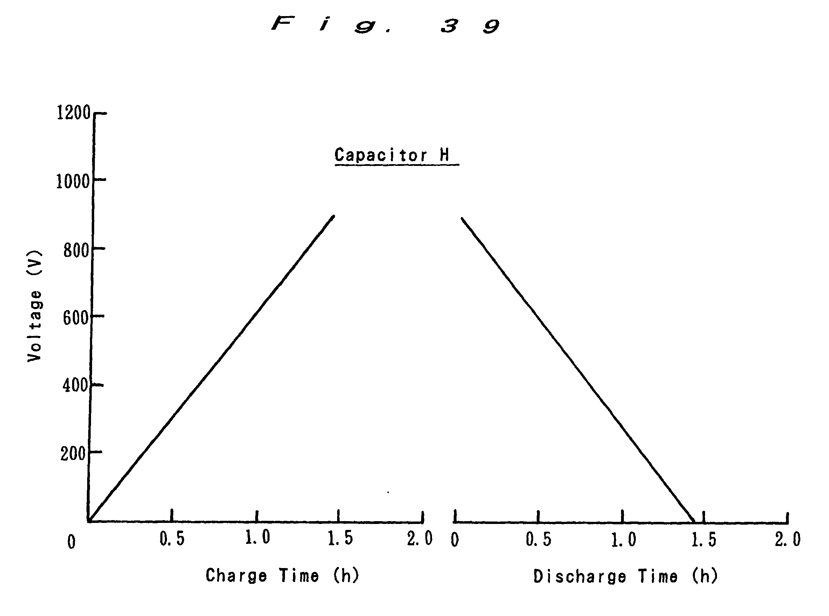

The capacitor H was charged with a constant current of 1 µA to 900 V and then discharged with a constant current of 1 A to 0 V. The charge time and the discharge time were both 5201.3 seconds. The charge-discharge curve obtained in this charge-discharge is shown in Figure 39. The capacitance and energy stored in charge of the capacitor H, obtained based on Figure 39, were 5.78 µF and 0.65 mWh, respectively. The capacitance was calculated by using the gradient of the voltage-time curve of discharge and the current value obtained in Figure 39, and the stored energy was calculated by using the area of the voltage-time curve of discharge and the current value obtained in Figure 39. The energy density of the capacitor H excluding the housing can was obtained by dividing the stored energy, 0.65 mWh, by the total weight of the used electrode group (including the pair of electrodes and the separator) and the poured silicone oil, 25.12 mg. As a result, the energy density was found to be 25.9 Wh/kg.

### Comparative Example 1

An electric double layer capacitor I was fabricated in the same manner as in Embodiment 1 except that an electrolyte obtained by dissolving LiBF₄ in propylene carbonate in a concentration of 1 mole/liter was used instead of the silicone oil.

### Energy Density

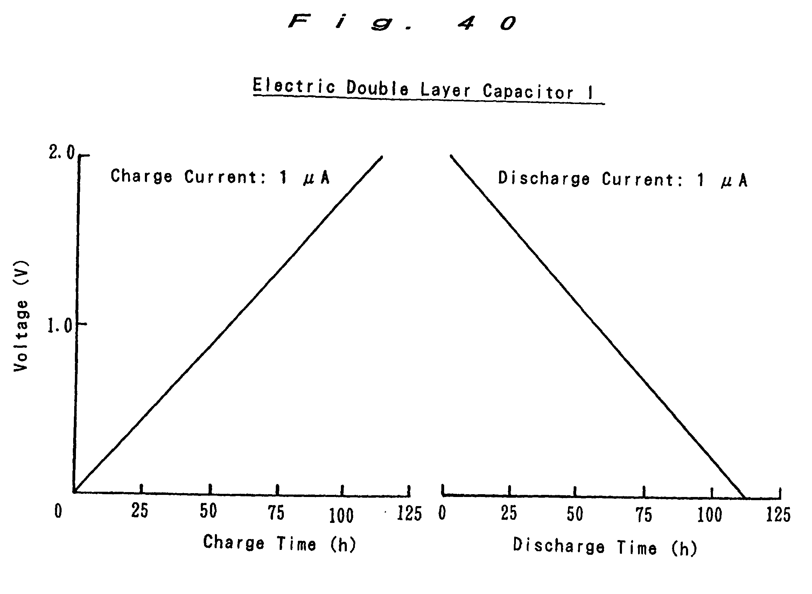

The capacitor I was charged with a constant current of 1 µA to 2 V and then discharged with a constant current of 1 µA to 0 V. The charge time and the discharge time were both 400000 seconds (111 hours). The charge-discharge curve obtained in this charge-discharge is shown in Figure 40. The capacitance and energy stored in charge of the electric double layer capacitor I, obtained based on Figure 40, were 0.2 F and 0.1 mWh, respectively. The capacitance was calculated by using the gradient of the voltage-time curve of discharge and the current value obtained in Figure 40, and the stored energy was calculated by using the area of the voltage-time curve of discharge and the current value obtained in Figure 40. The energy density of the electric double layer capacitor I excluding the housing can was obtained by dividing the stored energy, 0.1 mWh, by the total weight of the used electrode group (including the pair of electrodes and the separator) and the poured liquid crystal material, 30 mg. As a result, the energy density was found to be 3.3 Wh/kg. Thus, the capacitor I has a much lower energy density than the present capacitors A through H.

### Comparative Example 2

A capacitor J was fabricated in the same manner as in Embodiment 1 except that an aluminum foil (with a specific surface area of 15.56 cm²/g and a thickness of 0.5 mm) was used instead of the activated carbon fabric.

### Energy Density

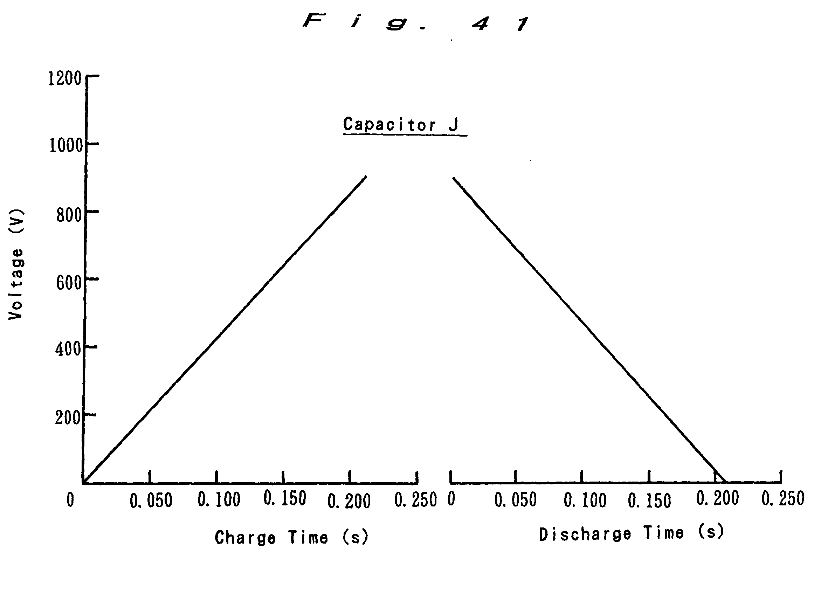

The capacitor J was charged with a constant current of 1 µA to 900 V and then discharged with a constant current of 1 A to 0 V. The charge time and the discharge time were both 0.217 seconds. Since the capacitance was much smaller than those of the capacitors A through H fabricated in the embodiments, the charge time and the discharge time were measured in 1/1000 second. The charge-discharge curve obtained in this charge-discharge is shown in Figure 41. The capacitance and energy stored in charge of the capacitor J, obtained based on Figure 41, were 240.95 pF and 0.0271 µWh, respectively. The capacitance was calculated by using the gradient of the voltage-time curve of discharge and the current value obtained in Figure 41, and the stored energy was calculated by using the area of the voltage-time curve of discharge and the current value obtained in Figure 41. The energy density of the capacitor J excluding the housing can was obtained by dividing the stored energy, 0.0271 µWh, by the total weight of the used electrode group (including the pair of electrodes and the separator) and the poured silicone oil, 848.7 mg. As a result, the energy density was found to be 3.2 x 10⁻⁵ Wh/kg. Thus, the capacitor J has a much lower energy density than the present capacitors A through H.

### Simulation

Assuming that a capacitor K fabricated by increasing the capacitor F in size to 100 kg is used as a driving power-supply of an electric motor of an electric vehicle, the performance of the electric vehicle will be examined.

Since the energy density of the capacitor F is 2179 Wh/kg, the amount of energy storable in the capacitor K with an increased size of 100 kg is 217900 Wh (≒ 217.9 kWh). A light vehicle carrying a gasoline engine (with a weight of the vehicle of 650 kg, a weight of the engine of 90 kg, a maximum power output of the engine of a 64-horsepower (ps) (≒ 48 kW), a rate of fuel consumption at the maximum power output of 300 g/ps/h, a weight of the fuel tank of 1 kg and a capacity of the fuel tank of 21 kg) is assumed to be remolded into an electric vehicle (with a weight of the motor of 10 kg and a maximum power output of the motor of 48 kW) carrying the capacitor K as the driving power-supply of the motor. In this case, the weight of the vehicle and the maximum power output are minimally changed through the remolding. The conversion efficiency from electric energy into mechanical energy is assumed to be 80%.

The light vehicle carrying the gasoline engine (gasoline-powered vehicle) used as the model is assumed to carry a 5-speed manual transmission, and a 5-speed gear ratio, a final reduction ratio and a tire radius are assumed to be set so that the maximum power output can be obtained at an engine speed attained at the top speed.

The gasoline-powered vehicle before the remolding has a top speed of 180 km/h, which depends upon the maximum power output of the engine and the running resistance. In the aforementioned remolding, the maximum power output of the motor is set to be equal to the maximum power output of the engine and the same body is used, and therefore, the top speed of the electric vehicle after the remolding can be regarded as 180 km/h.

The gasoline-powered vehicle before the remolding and the electric vehicle after the remolding are compared in time and distance ranges covered at the top speed as follows:

### Gasoline-powered Vehicle

The power output of the engine obtained at the top speed is equal to the maximum power output, 64 ps. Since the rate of fuel consumption is 300 g/ps/h, 300 x 64 g (= 19.2 kg) of fuel is consumed per hour. Since the capacity of the fuel tank is 21 kg, the time range covered with a full tank is 21/19.2 (= 1.09375) hours. Also, since the top speed is 180 km/h, the distance range covered with a full tank is 180 x 1.09375 (=196.875) km.

### Electric Vehicle

The power output of the motor obtained at the top speed is equal to the maximum power output, 48 kW. The amount of energy stored in the capacitor is 217 kWh and the conversion efficiency from electric energy to mechanical energy is assumed to be 80%, and hence, the time range covered by full-charge is 217.9/48 x 0.8 (≒ 3.6316) hours. Since the top speed is 180 km/h, the distance range covered by full-charge is 180 x 3.6316 (≒ 654) km.

Next, simulation will be carried out on the case where a lithium secondary battery or a nickel-metal hydride storage battery increased in size to 100 kg is replaced with the capacitor K under the same remolding conditions.

In general, a lithium secondary battery has an energy density of 122 Wh/kg and a nickel-metal hydride storage battery has an energy density of 78 Wh/kg. Therefore, the amounts of energy storable in these batteries with an increased size of 100 kg are 12.2 kWh and 7.8 kWh, respectively. Examination is made under assumption that each of these batteries is carried by the remolded vehicle (with a weight of the motor of 10 kg and the maximum power output of the motor of 48 kW). In this case, the weight of the vehicle and the maximum power output are minimally changed through the remolding. The conversion efficiency from electric energy into mechanical energy is assumed to be 80%.

The power output of the motor obtained at the top speed is equal to the maximum power output, 48 kW. The amounts of energy stored in the batteries are 12.2 kWh in the lithium secondary battery and 7.8 kWh in the nickel-metal hydride storage battery, and hence, the time ranges covered by full-charge are 0.2032 hour and 0.13 hour, respectively. Also, since the top speed is 180 km/h, the distance ranges covered by full-charge are 36.6 km and 23.4 km, respectively.

On the basis of the results of the aforementioned simulation, it is understood that the time and distance ranges are much larger in the electric vehicle using the capacitor of this invention as a driving power-supply of the motor than in the gasoline-powered vehicle or the electric vehicle using a lithium secondary battery or a nickel-metal hydride storage battery as a driving power-supply of the electric motor.

Next, simulation is carried out on the case where a capacitor L fabricated by increasing the capacitor A in size to 100 kg is used as the driving power-supply for the motor of the remolded vehicle.

Since the capacitor A has an energy density of 67.2 Wh/kg, the amount of energy storable in the capacitor L with an increased size of 100 kg is 6.72 kWh. Examination is made on the case where this capacitor is carried as a driving power-supply of the motor of the remolded vehicle (with a weight of the motor of 10 kg and the maximum power output of the motor of 48 kW). In this case, the weight of the vehicle and the maximum power output are minimally changed through the remolding. The conversion efficiency from electric energy into mechanical energy is assumed to be 80%.

The power output of the motor obtained at the top speed is equal to the maximum power output, 48 kW. Since the amount of energy stored in the capacitor L is 6.72 kWh, the time range covered by full-charge is 0.112 hour. Also, since the top speed is 180 km/h, the distance range covered by full-charge is 20.16 km. In this manner, the time and distance ranges are both smaller in using the capacitor L than in using a nickel-metal hydride storage battery.

It is, however, necessary to consider regeneration of kinetic energy during deceleration. Regeneration is an energy recovering system in which kinetic energy is converted into electric energy by using a motor as a generator so as to use the electric energy for charging a battery.

In the case where a vehicle running at the top speed is decelerated at the maximum acceleration, the maximum acceleration is varied depending upon the frictional force of a tire. In general, a friction coefficient between a tire and a dried road surface can be regarded as 1, and hence, the maximum acceleration during the deceleration can be assumed as 1 G (9.8 m/s²). This assumption is based on the severest braking. The kinetic energy to be regenerated in this case is given as 1/2 · mv² (wherein m is the mass of the vehicle and v is the speed of the vehicle), and therefore, the kinetic energy of the remolded vehicle (with a weight of 650 g, which is equivalent to the mass of the vehicle) running at a speed of 180 km/h is 812500 J. Since the energy conversion ratio obtained by assuming the motor as a generator is approximately 80%, electric energy to be recharged is 812500 x 0.8 (= 650000) J, namely, 180.6 Wh. Time required for a vehicle running at a speed of 180 km/h to decelerate at the acceleration of 1 G is 5.1 seconds. Therefore, perfect regeneration cannot be achieved unless 180.6 Wh of energy is charged in 5.1 seconds (namely, at a charge rate of 35.4 Wh/sec.). The chargeable rate (hourly rate) attained in using a battery is approximately 8 C in a nickel-metal hydride storage battery and approximately 4 C in a lithium secondary battery. Therefore, the charge rates obtained based on these rates are 17.3 Wh/sec. in a nickel-metal hydride storage battery and 13.6 Wh/sec. in a lithium secondary battery. Thus, the rates are lower than the aforementioned charge rate, 35.4 Wh/sec., required for the regeneration.

On the other hand, the capacitor A can be fully charged in 135 seconds with a constant current of 100 µA, and therefore, the capacitor L increased in size can be regarded to have the same charge load characteristic. Therefore, the chargeable rate is 49.8 Wh/sec., which is higher than the charge rate, 35.4 Wh/sec., required for the regeneration. Accordingly, the regeneration can be achieved even in the severest breaking.

In this manner, the present capacitor L is much better than a battery from the viewpoint of regeneration. Also, the present capacitor L is good at charge time. Specifically, the charge rate is 17.3 Wh/sec. or less even in a nickel-metal hydride storage battery having a comparatively large charge rate among batteries. Therefore, when a battery is used, it take at least 0.125 hour (450 seconds) for full-charge. In contrast, the capacitor L can be fully charged in 135 seconds.

The present capacitor can be charged by a direct contact type method through an electrode or an electromagnetic induction type method using electromagnetic induction. Also, the present capacitor can be charged in time equivalent to time required for filling up a tank of a gasoline-powered vehicle (1 through 2 minutes).

It is obvious on the basis of the aforementioned simulation that a power-supply of any machine currently using the rotation power of an internal combustion engine (such as an airplane, a ship, a crane and a robot) can be replaced with a combination of the present capacitor and an electric motor.

### Industrial Applicability

The invention provides a capacitor with a high energy density.

## Claims

1. A capacitor comprising:
a pair of electrodes opposing each other and made from a conductive material having a specific surface area of 960 m²/g or more; and
a liquid dielectric filled between the pair of electrodes and having conductivity of 1 x 10⁻⁷ Scm⁻¹ or less.

2. The capacitor according to Claim 1,
wherein the conductive material is activated carbon.

3. The capacitor according to Claim 1,
wherein the liquid dielectric is a silicone oil.

4. The capacitor according to Claim 1,
wherein the liquid dielectric is a fluorine compound.

5. The capacitor according to Claim 1,
wherein the liquid dielectric is a liquid crystal material.

6. A machine comprising the capacitor of any of Claims 1 through 5 as a driving power-supply of an electric motor.

7. An electric vehicle comprising the capacitor of any of Claims 1 though 5 as a driving power-supply of an electric motor.
